(19) Europäisches Patentamt
European Patent Office
Office européen des brevets

(11) EP 4 755 604 A1

(12) **EUROPEAN PATENT APPLICATION**
published in accordance with Art. 153(4) EPC

(43) Date of publication:
**10.06.2026 Bulletin 2026/24**

(21) Application number: **24849152.4**

(22) Date of filing: **30.07.2024**

(51) International Patent Classification (IPC):
***B29B 17/02*** (2006.01) ***B02C 19/00*** (2006.01)
***C08J 11/04*** (2006.01) ***C08J 11/06*** (2006.01)
***C08J 11/16*** (2006.01) ***C08L 45/00*** (2006.01)
***C08L 65/00*** (2006.01) ***C08L 67/00*** (2006.01)
***C08L 69/00*** (2006.01)

(52) Cooperative Patent Classification (CPC):
**B02C 19/00; B29B 17/02; C08J 11/04; C08J 11/06; C08J 11/16; C08L 45/00; C08L 65/00; C08L 67/00; C08L 69/00;** Y02W 30/62

(86) International application number:
**PCT/JP2024/027061**

(87) International publication number:
**WO 2025/028501 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.08.2023 JP 2023125711**
**20.09.2023 JP 2023153954**

(71) Applicant: **MITSUBISHI GAS CHEMICAL COMPANY, INC.**
**Chiyoda-ku**
**Tokyo 100-8324 (JP)**

(72) Inventors:
- **SHIRATAKE, Munenori**
  **Kamisu-shi, Ibaraki 314-0102 (JP)**
- **ISHIZUKA, Hirohito**
  **Kamisu-shi, Ibaraki 314-0102 (JP)**
- **HOSOKAWA, Tomoya**
  **Kamisu-shi, Ibaraki 314-0102 (JP)**
- **KOSHIISHI, Eiji**
  **Kamisu-shi, Ibaraki 314-0102 (JP)**

(74) Representative: **Hoffmann Eitle**
**Patent- und Rechtsanwälte PartmbB**
**Arabellastraße 30**
**81925 München (DE)**

(54) **METHOD OF PRODUCING THERMOPLASTIC RESIN**

(57) Provided is a method for producing a recycled resin from a waste resin composition, wherein the waste resin composition comprises: a thermoplastic resin B which contains one or more thermoplastic resins that are selected from the group consisting of a thermoplastic resin B1 that contains a structural unit (b-1) which is derived from a monomer represented by general formula (1-1), a thermoplastic resin B2 that contains a structural unit (b-2) which is derived from a monomer represented by general formula (1-2), and a thermoplastic resin B3 that contains a structural unit (b-3) which is derived from a monomer represented by general formula (1-3); and at least one of a thermoplastic resin C which contains only a structural unit (c) that is derived from a monomer represented by general formula (2), and a thermoplastic resin D which contains at least one structural unit that is selected from the group consisting of general formulae (7) to (10). This method comprises: pulverizing the waste resin composition so as to obtain a pulverized material; and sorting out the thermoplastic resin B, and the thermoplastic resin C and the thermoplastic resin D by means of UV.

EP 4 755 604 A1

## Description

TECHNICAL FIELD

The present invention relates to a method for producing a thermoplastic resin. More particularly, the present invention relates to a method for producing a thermoplastic resin, comprising producing a recycled resin from a waste resin composition.

BACKGROUND ART

Thermoplastic resins are some of very useful resins used in various fields in daily life, and recycling such thermoplastic resins is of great interest. However, sprues and runners discharged after molding in the manufacturing process of a product using a thermoplastic resin have not always been utilized effectively. One of the reasons for this is that, while sprues and runners collected as waste resin materials are first pulverized for use in producing a recycled resin, the pulverized materials may contain trace amounts of other grade products or other resins, which requires these trace amounts of mixed resins to be removed when separating and collecting the pulverized material. Patent literature 1 describes optical sorting of plastics by resin type (Patent literature 1: Figure 8). However, it is difficult to obtain a recycled resin of high purity through further sorting of the same types of resins. Furthermore, although methods for producing a recycled resin from a waste resin composition, such as a method comprising a step of contacting with brine, a method comprising a step of contacting with activated carbon, a method comprising a hydrocyclone treatment, and a method comprising depolymerization of a resin into monomers followed by repolymerization, have been developed, there is room for improvement (Patent literature 2). In addition, contamination with unintentional types of resins is more likely to affect the optical properties, especially in optical material applications compared to other resin applications, and this requires the purification of the recycled resins to be comparable to that of new resins. Therefore, there is still a need for a method of obtaining a high-purity recycled resin from a waste resin composition, especially from one containing multiple resins of the same type.

PRIOR ART LITERATURES

Patent literatures

Patent literature 1: JP 2010-167727 A
Patent literature 2: WO 2021/200892

SUMMARY OF THE INVENTION

Problem to be Solved by the Invention

The present invention provides a method for producing a recycled resin from a waste resin composition.

Means for Solving the Problem

The present invention includes the following aspects.

<1> A method for producing a recycled resin from a waste resin composition, wherein the waste resin composition comprises:

a thermoplastic resin B which comprises one or more selected from the group consisting of a thermoplastic resin B1 containing a structural unit (b-1) derived from a monomer represented by general formula (1-1) below, a thermoplastic resin B2 containing a structural unit (b-2) derived from a monomer represented by general formula (1-2) below, and a thermoplastic resin B3 containing a structural unit (b-3) derived from a monomer represented by general formula (1-3) below; and
at least one of a thermoplastic resin C containing only a structural unit (c) derived from a monomer represented by general formula (2) below, and a thermoplastic resin D containing at least one structural unit selected from the group consisting of general formulae (7)-(10) below, and
the method comprises:

pulverizing the waste resin composition to obtain a pulverized material; and
sorting the thermoplastic resin B, and the thermoplastic resin C and the thermoplastic resin D by means of UV:

[Chem 1]

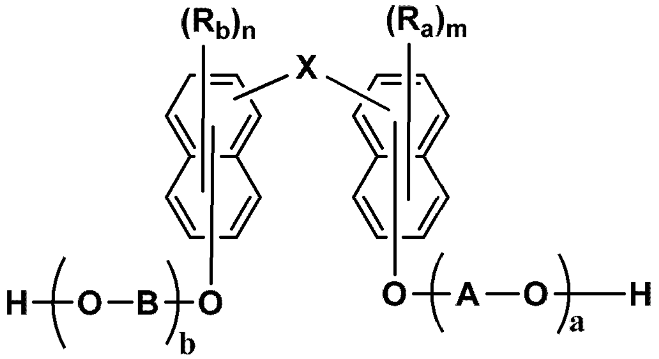

(1-1)

in general formula (1-1),

$R_a$ and $R_b$ are each independently selected from a halogen atom, an optionally substituted alkyl group with 1-20 carbon atoms, an optionally substituted alkoxy group with 1-20 carbon atoms, an optionally substituted cycloalkyl group with 5-20 carbon atoms, an optionally substituted cycloalkoxy group with 5-20 carbon atoms, an optionally substituted aryl group with 6-20 carbon atoms, an optionally substituted heteroaryl group with 3-20 carbon atoms containing one or more heteroatoms selected from O, N, and S, an optionally substituted aryloxy group with 6-20 carbon atoms, and $-C{\equiv}C-R_h$,
$R_h$ represents an optionally substituted aryl group with 6-20 carbon atoms or an optionally substituted heteroaryl group with 3-20 carbon atoms containing one or more heteroatoms selected from O, N, and S,
m and n each independently represent an integer from 0 to 5, and
X represents a single bond, -O-, -S-, -SO-, $-SO_2-$, -CO-, or a divalent group represented by any of general formulae (3)-(6) below;

[Chem 2]

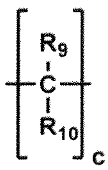
(3)

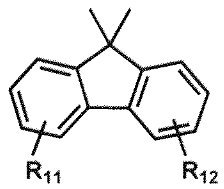
(4)

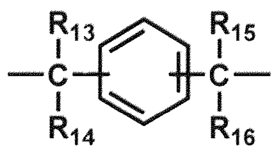
(5)

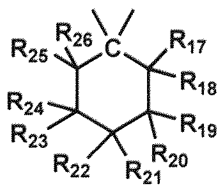
(6)

in general formulae (3)-(6),

$R_9$ and $R_{10}$ each independently represent hydrogen, a halogen, an optionally substituted alkyl group with 1-20 carbon atoms, an optionally substituted alkoxy group with 1-5 carbon atoms, an optionally substituted aryl group with 6-12 carbon atoms, an optionally substituted aralkyl group with 7-17 carbon atoms, or an optionally substituted alkenyl group with 2-15 carbon atoms, or
$R_9$ and $R_{10}$ bind with each other to form a carbon ring having 3-20 carbon atoms or a heterocyclic ring having 1-20 carbon atoms,
c represents an integer from 0 to 20,
$R_{11}$ and $R_{12}$ each independently represent hydrogen, a halogen, an optionally substituted alkyl with 1-20 carbon atoms, an optionally substituted alkoxy group with 1-5 carbon atoms, an optionally substituted aryl group with 6-12 carbon atoms, an optionally substituted aralkyl group with 7-17 carbon atoms, or an optionally substituted alkenyl group with 2-15 carbon atoms, or
$R_{11}$ and $R_{12}$ bind with each other to form a carbon ring having 3-20 carbon atoms or a heterocyclic ring having 1-20 carbon atoms,

$R_{13}$-$R_{16}$ each independently represent hydrogen, a halogen, an optionally substituted alkyl group with 1-20 carbon atoms, an optionally substituted alkoxy group with 1-5 carbon atoms, an optionally substituted aryl group with 6-12 carbon atoms, an optionally substituted aralkyl group with 7-17 carbon atoms, or an optionally substituted alkenyl group with 2-15 carbon atoms, or
$R_{13}$ and $R_{14}$ or $R_{15}$ and $R_{16}$ bind with each other to form a carbon ring having 3-20 carbon atoms or a heterocyclic ring having 1-20 carbon atoms,
$R_{17}$-$R_{26}$ each independently represent hydrogen or an alkyl group with 1-3 carbon atoms, where at least one of $R_{17}$-$R_{26}$ is an alkyl group with 1-3 carbon atoms,
A and B each independently represent a saturated hydrocarbon group with 1-5 carbon atoms, and a and b each independently represent an integer from 0 to 10;

[Chem 3-1]

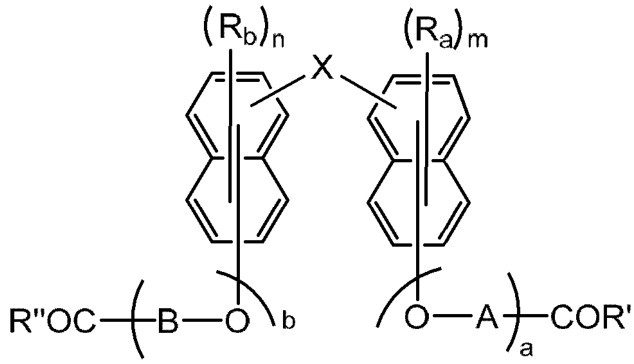

(1-2)

in general formula (1-2),

$R_a$ and $R_b$ are each independently selected from the group consisting of a hydrogen atom, a halogen atom, an optionally substituted alkyl group with 1-20 carbon atoms, an optionally substituted alkoxy group with 1-20 carbon atoms, an optionally substituted cycloalkyl group with 5-20 carbon atoms, an optionally substituted cycloalkoxy group with 5-20 carbon atoms, an optionally substituted aryl group with 6-20 carbon atoms, an optionally substituted heteroaryl group with 3-20 carbon atoms containing one or more heteroatoms selected from O, N, and S, an optionally substituted aryloxy group with 6-20 carbon atoms, and -C≡C-$R_h$,
$R_h$ represents an optionally substituted aryl group with 6-20 carbon atoms or an optionally substituted heteroaryl group with 3-20 carbon atoms containing one or more heteroatoms selected from O, N, and S,
X represents a single bond or an optionally substituted fluorene group,
A and B are each independently an optionally substituted alkylene group with 1-5 carbon atoms,
m and n are each independently an integer from 0 to 6, and preferably an integer from 0 to 3,
a and b are each independently an integer from 0 to 10, and preferably an integer from 1 to 3, and
R' and R'' are each independently selected from the group consisting of a hydroxy group, a halogen atom, an optionally substituted alkoxy group with 1-20 carbon atoms, and an optionally substituted aryloxy group with 6-20 carbon atoms;

[Chem 3-2]

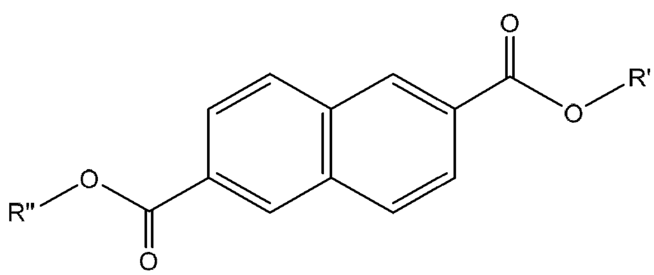

(1-3)

in general formula (1-3),

R' and R" are each independently selected from the group consisting of a hydrogen atom, a halogen atom, an optionally substituted alkyl group with 1-20 carbon atoms, and an optionally substituted aryl group with 6-20 carbon atoms;

[Chem 4]

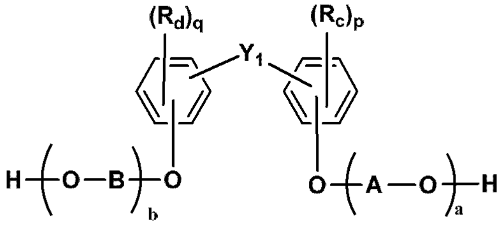

(2)

in general formula (2),

$R_c$ and $R_d$ are each independently selected from a halogen atom, an optionally substituted alkyl group with 1-20 carbon atoms, an optionally substituted alkoxy group with 1-20 carbon atoms, an optionally substituted cycloalkyl group with 5-20 carbon atoms, an optionally substituted cycloalkoxy group with 5-20 carbon atoms, an optionally substituted aryl group with 6-20 carbon atoms, an optionally substituted heteroaryl group with 3-20 carbon atoms containing one or more heteroatoms selected from O, N, and S, an optionally substituted aryloxy group with 6-20 carbon atoms, and -C≡C-$R_h$,
$R_h$ represents an optionally substituted aryl group with 6-20 carbon atoms or an optionally substituted heteroaryl group with 3-20 carbon atoms containing one or more heteroatoms selected from O, N, and S,
p and q each independently represent an integer from 0 to 5, and
$Y_1$ is a single bond, -O-, -S-, -SO-, $-SO_2-$, -CO-, or a divalent group represented by any of general formulae (3)-(6) below;

[Chem 5]

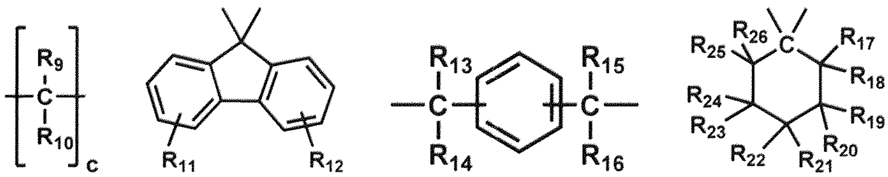

(3) (4) (5) (6)

in general formulae (3)-(6),

$R_9$ and $R_{10}$ each independently represent hydrogen, a halogen, an optionally substituted alkyl group with 1-20 carbon atoms, an optionally substituted alkoxy group with 1-5 carbon atoms, an optionally substituted aryl group with 6-12 carbon atoms, an optionally substituted aralkyl group with 7-17 carbon atoms, or an optionally substituted alkenyl group with 2-15 carbon atoms, or
$R_9$ and $R_{10}$ bind with each other to form a carbon ring having 3-20 carbon atoms or a heterocyclic ring having 1-20 carbon atoms,
c represents an integer from 0 to 20,
$R_{11}$ and $R_{12}$ each independently represent hydrogen, a halogen, an optionally substituted alkyl group with 1-20 carbon atoms, an optionally substituted alkoxy group with 1-5 carbon atoms, an optionally substituted aryl group with 6-12 carbon atoms, an optionally substituted aralkyl group with 7-17 carbon atoms, or an optionally substituted alkenyl group with 2-15 carbon atoms, or
$R_{11}$ and $R_{12}$ bind with each other to form a carbon ring having 3-20 carbon atoms or a heterocyclic ring having 1-20 carbon atoms,

$R_{13}$-$R_{16}$ each independently represent hydrogen, a halogen, an optionally substituted alkyl group with 1-20 carbon atoms, an optionally substituted alkoxy group with 1-5 carbon atoms, an optionally substituted aryl group with 6-12 carbon atoms, an optionally substituted aralkyl group with 7-17 carbon atoms, or an optionally substituted alkenyl group with 2-15 carbon atoms, or
$R_{13}$ and $R_{14}$ or $R_{15}$ and $R_{16}$ bind with each other to form a carbon ring having 3-20 carbon atoms or a heterocyclic ring having 1-20 carbon atoms,
$R_{17}$-$R_{26}$ is each independently hydrogen or an alkyl group with 1-3 carbon atoms, where at least one of $R_{17}$-$R_{26}$ is an alkyl group with 1-3 carbon atoms,
A and B each independently represent a saturated hydrocarbon group with 1-5 carbon atoms, and
a and b each independently represent an integer from 0 to 10;

[Chem 6]

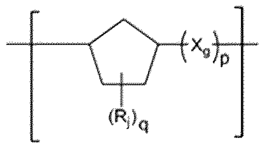
(7)

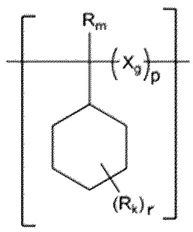
(8)

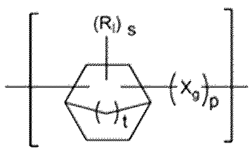
(9)

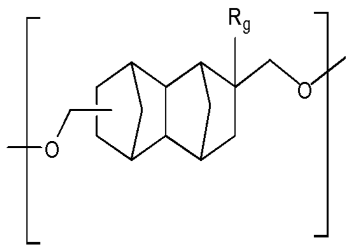
(10)

in general formulae (7)-(10),

$X_g$ each independently represent an alkylene group with 1-10 carbon atoms,
$R_j$, $R_k$, and $R_l$ are each independently selected from a halogen atom, an optionally substituted alkyl group with 1-20 carbon atoms, an optionally substituted alkoxy group with 1-20 carbon atoms, an optionally substituted cycloalkyl group with 5-20 carbon atoms, an optionally substituted cycloalkoxy group with 5-20 carbon atoms, an optionally substituted aryl group with 6-20 carbon atoms, an optionally substituted heteroaryl group with 3-20 carbon atoms containing one or more heteroatoms selected from O, N, and S, an optionally substituted aryloxy group with 6-20 carbon atoms, and -C≡C-$R_i$,
$R_i$ represents an aryl group with 6-20 carbon atoms or a heteroaryl group with 3-20 carbon atoms containing one or more heteroatoms selected from O, N, and S,
p each independently represent an integer of 0 or 1,

q, r, and s each independently represent an integer from 0 to 10,
t represents an integer from 1 to 3,
when q is 2 or higher and two $R_j$ exist on adjacent carbon atoms, the two $R_j$ may form a ring structure together,
when r is 2 or higher and two $R_k$ exist on adjacent carbon atoms, the two $R_k$ may form a ring structure together,
when s is 2 or higher and two $R_l$ exist on adjacent carbon atoms, the two $R_l$ may form a ring structure together,
$R_m$ represents a hydrogen atom or an alkyl group with 1-3 carbon atoms, and
$R_g$ represents a hydrogen atom or an alkyl group with 1-3 carbon atoms.

<2> The method according to <1>, wherein the pulverized material is subjected to winnowing separation prior to the sorting.
<3> The method according to <1>, wherein

the waste resin composition comprises: a thermoplastic resin B which comprises one or more selected from the group consisting of a thermoplastic resin B1 containing a structural unit (b-1) derived from a monomer represented by general formula (1-1) above, a thermoplastic resin B2 containing a structural unit (b-2) derived from a monomer represented by general formula (1-2) above, and a thermoplastic resin B3 containing a structural unit (b-3) derived from a monomer represented by general formula (1-3) above; and a thermoplastic resin C containing only a structural unit (c) derived from a monomer represented by general formula (2) above, and
the method comprises:

pulverizing the waste resin composition to obtain a pulverized material; and
sorting the thermoplastic resin B, and the thermoplastic resin C by means of UV.

<4> The method according to <3>, wherein the pulverized material is subjected to winnowing separation prior to the sorting.
<5> The method according to <1>, wherein

the waste resin composition comprises: a thermoplastic resin B which comprises one or more selected from the group consisting of a thermoplastic resin B1 containing a structural unit (b-1) derived from a monomer represented by general formula (1-1) above, a thermoplastic resin B2 containing a structural unit (b-2) derived from a monomer represented by general formula (1-2) above, and a thermoplastic resin B3 containing a structural unit (b-3) derived from a monomer represented by general formula (1-3) above; and a thermoplastic resin D containing at least one structural unit selected from the group consisting of general formulae (7)-(10) above, and
the method comprises:

pulverizing the waste resin composition to obtain a pulverized material; and
sorting the thermoplastic resin B, and the thermoplastic resin D by means of UV.

<6> The method according to <5>, wherein the pulverized material is subjected to winnowing separation prior to the sorting.
<7> The method according to <1>, wherein

the waste resin composition comprises: a thermoplastic resin B which comprises one or more selected from the group consisting of a thermoplastic resin B1 containing a structural unit (b-1) derived from a monomer represented by general formula (1-1) above, a thermoplastic resin B2 containing a structural unit (b-2) derived from a monomer represented by general formula (1-2) above, and a thermoplastic resin B3 containing a structural unit (b-3) derived from a monomer represented by general formula (1-3) above; and both of a thermoplastic resin C containing only a structural unit (c) derived from a monomer represented by general formula (2) above and a thermoplastic resin D containing at least one structural unit selected from the group consisting of general formulae (7)-(10) above, and
the method comprises:

pulverizing the waste resin composition to obtain a pulverized material; and
sorting the thermoplastic resin B, and the thermoplastic resin C and the thermoplastic resin D by means of UV.

<8> The method according to <7>, wherein the pulverized material is subjected to winnowing separation prior to the sorting.
<9> The method according to <1>, wherein the thermoplastic resin B is a polycarbonate resin, a polyester carbonate resin, or a polyester resin.
<10> The method according to <1>, wherein the thermoplastic resin C is a polycarbonate resin, a polyester carbonate resin, or a polyester resin.
<11> The method according to <1>, wherein the thermoplastic resin B and the thermoplastic resin C are polycarbonate resins.

Advantageous Effects of the Invention

According to the method of the present invention, a high-purity recycled resin can be obtained from a waste resin composition.

MODES FOR CARRYING OUT THE INVENTION

Hereinafter, the present invention will be described in detail.
The present invention provides a method for producing a recycled resin from a waste resin composition.

<Waste resin composition>

According to a method for producing a recycled resin from a waste resin composition of the present invention, the waste resin composition comprises:

a thermoplastic resin B which comprises one or more selected from the group consisting of a thermoplastic resin B1 containing a structural unit (b-1) derived from a monomer represented by general formula (1-1) below, a thermoplastic resin B2 containing a structural unit (b-2) derived from a monomer represented by general formula (1-2) below, and a thermoplastic resin B3 containing a structural unit (b-3) derived from a monomer represented by general formula (1-3) below; and
at least one of a thermoplastic resin C containing only a structural unit (c) derived from a monomer represented by general formula (2) below, and a thermoplastic resin D containing at least one structural unit selected from the group consisting of general formulae (7)-(10) below:

[Chem 7]

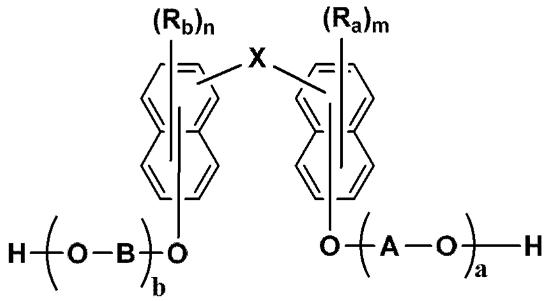

(1－1)

in general formula (1-1),

$R_a$ and $R_b$ are each independently selected from a halogen atom, an optionally substituted alkyl group with 1-20 carbon atoms, an optionally substituted alkoxy group with 1-20 carbon atoms, an optionally substituted cycloalkyl group with 5-20 carbon atoms, an optionally substituted cycloalkoxy group with 5-20 carbon atoms, an optionally substituted aryl group with 6-20 carbon atoms, an optionally substituted heteroaryl group with 3-20 carbon atoms containing one or more heteroatoms selected from O, N, and S, an optionally substituted aryloxy group with 6-20 carbon atoms, and -C≡C-$R_h$,
$R_h$ represents an optionally substituted aryl group with 6-20 carbon atoms or an optionally substituted heteroaryl group with 3-20 carbon atoms containing one or more heteroatoms selected from O, N, and S,
m and n each independently represent an integer from 0 to 5, and
X is a single bond, -O-, -S-, -SO-, -$SO_2$-, -CO-, or a divalent group represented by any of general formulae (3)-(6)

below;

[Chem 8]

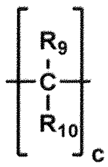 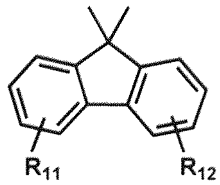 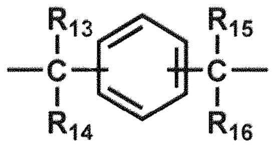 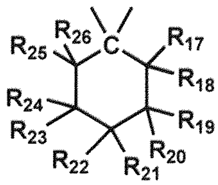

(3) (4) (5) (6)

in general formulae (3)-(6),

$R_9$ and $R_{10}$ each independently represent hydrogen, a halogen, an optionally substituted alkyl group with 1-20 carbon atoms, an optionally substituted alkoxy group with 1-5 carbon atoms, an optionally substituted aryl group with 6-12 carbon atoms, an optionally substituted aralkyl group with 7-17 carbon atoms, or an optionally substituted alkenyl group with 2-15 carbon atoms, or
$R_9$ and $R_{10}$ bind with each other to form a carbon ring having 3-20 carbon atoms or a heterocyclic ring having 1-20 carbon atoms,
c represents an integer from 0 to 20,
$R_{11}$ and $R_{12}$ each independently represent hydrogen, a halogen, an optionally substituted alkyl group with 1-20 carbon atoms, an optionally substituted alkoxy group with 1-5 carbon atoms, an optionally substituted aryl group with 6-12 carbon atoms, an optionally substituted aralkyl group with 7-17 carbon atoms, or an optionally substituted alkenyl group with 2-15 carbon atoms, or $R_{11}$ and $R_{12}$ bind with each other to form a carbon ring having 3-20 carbon atoms or a heterocyclic ring having 1-20 carbon atoms,
$R_{13}$-$R_{16}$ each independently represent hydrogen, a halogen, an optionally substituted alkyl group with 1-20 carbon atoms, an optionally substituted alkoxy group with 1-5 carbon atoms, an optionally substituted aryl group with 6-12 carbon atoms, an optionally substituted aralkyl group with 7-17 carbon atoms, or an optionally substituted alkenyl group with 2-15 carbon atoms, or
$R_{13}$ and $R_{14}$ or $R_{15}$ and $R_{16}$ bind with each other to form a carbon ring having 3-20 carbon atoms or a heterocyclic ring having 1-20 carbon atoms,
$R_{17}$-$R_{26}$ is each independently hydrogen or an alkyl group with 1-3 carbon atoms, where at least one of $R_{17}$-$R_{26}$ is an alkyl group with 1-3 carbon atoms,
A and B each independently represent a saturated hydrocarbon group with 1-5 carbon atoms, and
a and b each independently represent an integer from 0 to 10;

[Chem 9-1]

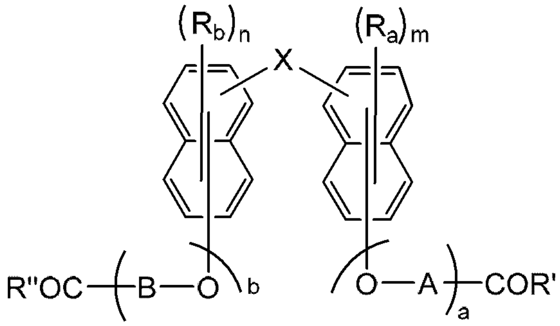

(1-2)

in general formula (1-2),

$R_a$ and $R_b$ are each independently selected from the group consisting of a hydrogen atom, a halogen atom, an optionally substituted alkyl group with 1-20 carbon atoms, an optionally substituted alkoxy group with 1-20 carbon atoms, an optionally substituted cycloalkyl group with 5-20 carbon atoms, an optionally substituted cycloalkoxy group with 5-20 carbon atoms, an optionally substituted aryl group with 6-20 carbon atoms, an optionally substituted heteroaryl group with 3-20 carbon atoms containing

one or more heteroatoms selected from O, N, and S, an optionally substituted aryloxy group with 6-20 carbon atoms, and -C≡C-$R_h$, preferably a hydrogen atom, an optionally substituted aryl group with 6-20 carbon atoms, or an optionally substituted heteroaryl group with 3-20 carbon atoms containing one or more heteroatoms selected from O, N, and S, more preferably a hydrogen atom or an optionally substituted aryl group with 6-20 carbon atoms, and still more preferably a hydrogen atom or an optionally substituted aryl group with 6-12 carbon atoms.

$R_h$ represents an optionally substituted aryl group with 6-20 carbon atoms or an optionally substituted heteroaryl group with 3-20 carbon atoms containing one or more heteroatoms selected from O, N, and S,

X represents a single bond or an optionally substituted fluorene group, preferably a single bond or an optionally substituted fluorene group with a total of 12-20 carbon atoms,

A and B are each independently an optionally substituted alkylene group with 1-5 carbon atoms, preferably an alkylene group with 2 or 3 carbon atoms,

m and n are each independently an integer from 0 to 6, preferably an integer from 0 to 3, and more preferably 0 or 1,

a and b are each independently an integer from 0 to 10, preferably an integer from 1 to 3, and more preferably 1 or 2,

R' and R" are each independently selected from the group consisting of a hydroxy group, a halogen atom, an optionally substituted alkoxy group with 1-20 carbon atoms, and an optionally substituted aryloxy group with 6-20 carbon atoms, preferably a hydroxy group, a linear alkoxy group with 1-5 carbon atoms, or an aryloxy group with 6-10 carbon atoms, and more preferably a hydroxy group, a methoxy group, an ethoxy group, or a phenyloxy group (phenoxy group);

[Chem 9-2]

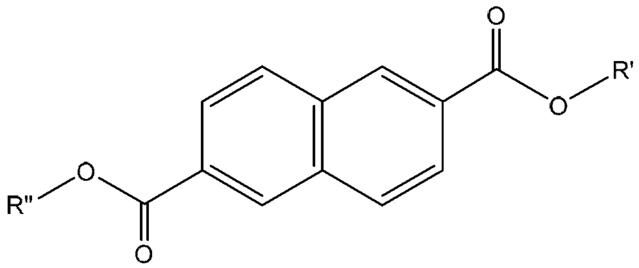

(1-3)

in general formula (1-3),

R' and R" are each independently selected from the group consisting of a hydrogen atom, a halogen atom, an optionally substituted alkoxy group with 1-20 carbon atoms, and an optionally substituted aryl group with 6-20 carbon atoms;

[Chem 10]

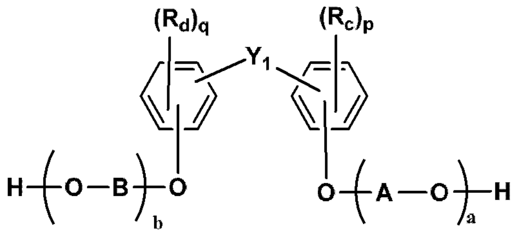

(2)

in general formula (2),

$R_c$ and $R_d$ are each independently selected from a halogen atom, an optionally substituted alkyl group with 1-20 carbon atoms, an optionally substituted alkoxy group with 1-20 carbon atoms, an optionally substituted cycloalkyl group with 5-20 carbon atoms, an optionally substituted cycloalkoxy group with 5-20 carbon atoms, an optionally substituted aryl group with 6-20 carbon atoms, an optionally substituted heteroaryl group with 3-20 carbon atoms containing one or more heteroatoms selected from O, N, and S, an optionally substituted aryloxy group with 6-20 carbon atoms, and

-C≡C-$R_h$,

$R_h$ represents an optionally substituted aryl group with 6-20 carbon atoms or an optionally substituted heteroaryl group with 3-20 carbon atoms containing one or more heteroatoms selected from O, N, and S,

p and q each independently represent an integer from 0 to 5, and

$Y_1$ is a single bond, -O-, -S-, -SO-, $-SO_2-$, -CO-, or a divalent group represented by any of general formulae (3)-(6) below;

[Chem 11]

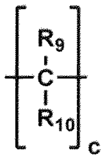
(3)

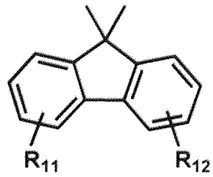
(4)

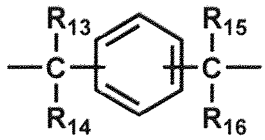
(5)

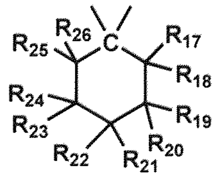
(6)

in general formulae (3)-(6),

$R_9$ and $R_{10}$ each independently represent hydrogen, a halogen, an optionally substituted alkyl group with 1-20 carbon atoms, an optionally substituted alkoxy group with 1-5 carbon atoms, an optionally substituted aryl group with 6-12 carbon atoms, an optionally substituted aralkyl group with 7-17 carbon atoms, or an optionally substituted alkenyl group with 2-15 carbon atoms, or $R_9$ and $R_{10}$ bind with each other to form a carbon ring having 3-20 carbon atoms or a heterocyclic ring having 1-20 carbon atoms,

c represents an integer from 0 to 20,

$R_{11}$ and $R_{12}$ each independently represent hydrogen, a halogen, an optionally substituted alkyl group with 1-20 carbon atoms, an optionally substituted alkoxy group with 1-5 carbon atoms, an optionally substituted aryl group with 6-12 carbon atoms, an optionally substituted aralkyl group with 7-17 carbon atoms, or an optionally substituted alkenyl group with 2-15 carbon atoms, or $R_{11}$ and $R_{12}$ bind with each other to form a carbon ring having 3-20 carbon atoms or a heterocyclic ring having 1-20 carbon atoms,

$R_{13}$-$R_{16}$ each independently represent hydrogen, a halogen, an optionally substituted alkyl group with 1-20 carbon atoms, an optionally substituted alkoxy group with 1-5 carbon atoms, an optionally substituted aryl group with 6-12 carbon atoms, an optionally substituted aralkyl group with 7-17 carbon atoms, or an optionally substituted alkenyl group with 2-15 carbon atoms, or $R_{13}$ and $R_{14}$ or $R_{15}$ and $R_{16}$ bind with each other to form a carbon ring having 3-20 carbon atoms or a heterocyclic ring having 1-20 carbon atoms,

$R_{17}$-$R_{26}$ is each independently hydrogen or an alkyl group with 1-3 carbon atoms, where at least one of $R_{17}$-$R_{26}$ is an alkyl group with 1-3 carbon atoms,

A and B each independently represent a saturated hydrocarbon group with 1-5 carbon atoms, and

a and b each independently represent an integer from 0 to 10;

[Chem 12]

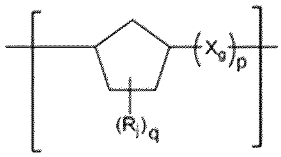

(7)

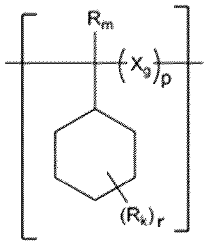

(8)

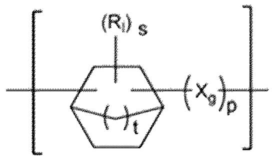

(9)

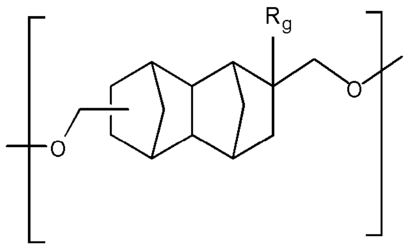

(10)

in general formulae (7)-(10),

$X_g$ each independently represent an alkylene group with 1-10 carbon atoms,
$R_j$, $R_k$, and $R_l$ are each independently selected from a halogen atom, an optionally substituted alkyl group with 1-20 carbon atoms, an optionally substituted alkoxy group with 1-20 carbon atoms, an optionally substituted cycloalkyl group with 5-20 carbon atoms, an optionally substituted cycloalkoxy group with 5-20 carbon atoms, an optionally substituted aryl group with 6-20 carbon atoms, an optionally substituted heteroaryl group with 3-20 carbon atoms containing one or more heteroatoms selected from O, N, and S, an optionally substituted aryloxy group with 6-20 carbon atoms, and $-C \equiv C-R_i$,
$R_i$ represents an aryl group with 6-20 carbon atoms or a heteroaryl group with 3-20 carbon atoms containing one or more heteroatoms selected from O, N, and S,
p each independently represent an integer of 0 or 1,
q, r, and s each independently represent an integer from 0 to 10,
t represents an integer from 1 to 3,
when q is 2 or higher and two $R_j$ exist on adjacent carbon atoms, the two $R_j$ may form a ring structure together,
when r is 2 or higher and two $R_k$ exist on adjacent carbon atoms, the two $R_k$ may form a ring structure together,
when s is 2 or higher and two $R_l$ exist on adjacent carbon atoms, the two $R_l$ may form a ring structure together,
$R_m$ represents a hydrogen atom or an alkyl group with 1-3 carbon atoms, and
$R_g$ represents a hydrogen atom or an alkyl group with 1-3 carbon atoms.

Examples of the halogen atom include a fluorine atom, a chlorine atom, a bromine atom, and an iodine atom.

Examples of the alkyl group with 1 to 20 carbon atoms include a methyl group, an ethyl group, a propyl group, an isopropyl group, a butyl group, an isobutyl group, a sec-butyl group, a tert-butyl group, a pentyl group, a hexyl group, a heptyl group, an octyl group, a nonyl group, a decyl group, an undecyl group, a dodecyl group, and an icosyl group.

Examples of the alkyl group with 1-10 carbon atoms include a methyl group, an ethyl group, a propyl group, an isopropyl group, a butyl group, an isobutyl group, a sec-butyl group, a tert-butyl group, and a pentyl group.

Examples of the alkoxy group with 1 to 20 carbon atoms include a methoxy group, an ethoxy group, a propyloxy group, an isopropyloxy group, a butoxy group, an isobutoxy group, a sec-butoxy group, a tert-butoxy group, a pentyloxy group, a hexyloxy group, a heptyloxy group, an octyloxy group, a nonyloxy group, a decyloxy group, an undecyloxy group, a dodecyloxy group, and an icosyloxy group.

Examples of the alkoxy group with 1-10 carbon atoms include a methoxy group, an ethoxy group, a propyloxy group, an isopropyloxy group, a butoxy group, an isobutoxy group, a sec-butoxy group, a tert-butoxy group, a pentyloxy group, a hexyloxy group, a heptyloxy group, an octyloxy group, a nonyloxy group, and a decyloxy group.

Examples of the alkoxy group with 1-6 carbon atoms include a methoxy group, an ethoxy group, a propyloxy group, an isopropyloxy group, a butoxy group, an isobutoxy group, a sec-butoxy group, a tert-butoxy group, a pentyloxy group, and a hexyloxy group.

Examples of the cycloalkyl group with 5-20 carbon atoms include a cyclopentyl group, a cyclohexyl group, a cycloheptyl group, a cyclooctyl group, a cyclododecyl group, a cyclotridecyl group, a cyclotetradecyl group, a cyclopentadecyl group, a cyclooctadecyl group, a bicyclo[2.2.1]heptyl group, and a bicyclo[2.2.2]octyl group.

Examples of the cycloalkyl group with 5-10 carbon atoms include a cyclopentyl group, a cyclohexyl group, a cycloheptyl group, a bicyclo[2.2.1]heptyl group, and a bicyclo[2.2.2]octyl group.

Examples of the cycloalkoxy group with 5-20 carbon atoms include a cyclopentyloxy group, a cyclohexyloxy group, a cycloheptyloxy group, a cyclooctyloxy group, a cyclododecyloxy group, a cyclotridecyloxy group, a cyclotetradecyloxy group, a cyclopentadecyloxy group, a cyclooctadecyloxy group, a bicyclo[2.2.1]heptyloxy group, and a bicyclo [2.2.2]octyloxy group.

Examples of the aryl group with 6-20 carbon atoms include a phenyl group, a tolyl group, a xylyl group, a trimethylphenyl group, a tetramethylphenyl group, an ethylphenyl group, an ethylmethylphenyl group, a diethylphenyl group, a propylphenyl group, an isopropylphenyl group, an isopropylmethylphenyl group, a benzyl group, a phenethyl group, a phenylpropyl group, a naphthyl group, an anthracenyl group, a phenanthrenyl group, a naphthacenyl group, a chryserinyl group, a pyrenyl group, a biphenyl group, a terphenyl group, and a quaterphenyl group.

Examples of the heteroaryl group with 3-20 carbon atoms containing one or more heteroatoms selected from O, N, and S include a furanyl group, a benzofuranyl group, an isobenzofuranyl group, a pyrrolyl group, an imidazolyl group, a pyrazolyl group, a triazolyl group, a pyridyl group, a pyrazyl group, a pyrimidyl group, a pyridazyl group, a pyrrolidyl group, an indolyl group, an isoindolyl group, an indazolyl group, a quinolyl group, an isoquinolyl group, a naphthylyl group, a quinoxalyl group, a quinazolyl group, a pteridyl group, a phenanthridyl group, an acridinyl group, a pyrimidinyl group, a phenanthrolinyl group, a phenazinyl group, a thiophenyl group, a thiopyranyl group, a benzothiophenyl group, a benzothiopyranyl group, an oxazolyl group, an isoxazolyl group, a thiazolyl group, an isothiazolyl group, a frazanyl group, an oxadiazolyl group, a dithiazolyl group, a benzoxazolyl group, a benzisoxazolyl group, a benzothiazolyl group, and a benzisothiazolyl group.

Examples of the aryloxy group with 6-20 carbon atoms include a phenyloxy group, a tolyloxy group, a xylyloxy group, a trimethylphenyloxy group, a tetramethylphenyloxy group, an ethylphenyloxy group, an ethylmethylphenyloxy group, a diethylphenyloxy group, a propylphenyloxy group, an isopropylphenyloxy group, an isopropylmethylphenyloxy group, a naphthyloxy group, an anthracenyloxy group, a phenanthrenyloxy group, a naphthacenyloxy group, a chryserinyloxy group, a pyrenyloxy group, a biphenyloxy group, a terphenyloxy group, and a quaterphenyloxy group.

Examples of the aryloxy group with 6-10 carbon atoms include a phenyloxy group, a tolyloxy group, a xylyloxy group, a trimethylphenyloxy group, a tetramethylphenyloxy group, an ethylphenyloxy group, an ethylmethylphenyloxy group, a diethylphenyloxy group, a propylphenyloxy group, an isopropylphenyloxy group, an isopropylmethylphenyloxy group, and a naphthyloxy group.

$R_i$ represents an aryl group with 6-20 carbon atoms or a heteroaryl group with 3-20 carbon atoms containing one or more heteroatoms selected from O, N, and S. Examples of the aryl group with 6-20 carbon atoms or the heteroaryl group with 3-20 carbon atoms containing one or more heteroatoms selected from O, N, and S include those listed above. Of these, $R_i$ is preferably a phenyl group or a naphthyl group, and more preferably a phenyl group, a 1-naphthyl group, or a 2-naphthyl group.

Examples of the alkylene group with 1-10 carbon atoms include methylene, ethylene, propylene, isopropylene, butylene, isobutylene, sec-butylene, tert-butylene, and pentylene. Of these, methylene, ethylene, propylene, butylene, isobutylene, and sec-butylene are preferred, and methylene, ethylene, and propylene are more preferred.

In the above formula, examples of the substituent in the "optionally substituted" groups include, but are not limited to, a halogen atom, an alkyl group with 1-10 carbon atoms, a cycloalkyl group with 5-10 carbon atoms, an alkoxy group with 1-10 carbon atoms, a cycloalkoxy group with 5-10 carbon atoms, an alkyloxycarbonyl group with 2-10 carbon atoms, a

cycloalkyloxycarbonyl group with 5-10 carbon atoms, an aryloxycarbonyl group with 7-15 carbon atoms, an alkylcarbonyloxy group with 2-10 atoms, a cycloalkylcarbonyloxy group with 5-10 carbon atoms, an arylcarbonyloxy group with 7-15 carbon atoms, a hydroxyalkylcarbonyl group with 2-10 carbon atoms, a glycidyloxycarbonyl group, a hydroxy group, a carboxy group, a cyano group, and an amide group with 1-10 carbon atoms.

In an embodiment of the present invention, there is provided a method for producing a recycled resin from a waste resin composition, wherein

the waste resin composition comprises: a thermoplastic resin B which comprises one or more selected from the group consisting of a thermoplastic resin B1 containing a structural unit (b-1) derived from a monomer represented by general formula (1-1) above, a thermoplastic resin B2 containing a structural unit (b-2) derived from a monomer represented by general formula (1-2) above, and a thermoplastic resin B3 containing a structural unit (b-3) derived from a monomer represented by general formula (1-3) above; and at least one of a thermoplastic resin C containing only a structural unit (c) derived from a monomer represented by general formula (2) above and a thermoplastic resin D containing at least one structural unit selected from the group consisting of general formulae (7)-(10) above, and
the method comprises:

pulverizing the waste resin composition to obtain a pulverized material; and
sorting the thermoplastic resin B, and the thermoplastic resin C and the thermoplastic resin D by means of UV.

In one embodiment of the present invention, the waste resin composition comprises: a thermoplastic resin B which comprises one or more selected from the group consisting of a thermoplastic resin B1 containing a structural unit (b-1) derived from a monomer represented by general formula (1-1) above, a thermoplastic resin B2 containing a structural unit (b-2) derived from a monomer represented by general formula (1-2) above, and a thermoplastic resin B3 containing a structural unit (b-3) derived from a monomer represented by general formula (1-3) above; and a thermoplastic resin C containing only a structural unit (c) derived from a monomer represented by general formula (2) above. In this embodiment, there is provided a method for producing a recycled resin from a waste resin composition, wherein

the waste resin composition comprises: a thermoplastic resin B which comprises one or more selected from the group consisting of a thermoplastic resin B1 containing a structural unit (b-1) derived from a monomer represented by general formula (1-1) above, a thermoplastic resin B2 containing a structural unit (b-2) derived from a monomer represented by general formula (1-2) above, and a thermoplastic resin B3 containing a structural unit (b-3) derived from a monomer represented by general formula (1-3) above; and a thermoplastic resin C containing only a structural unit (c) derived from a monomer represented by general formula (2) above, and
the method comprises:

pulverizing the waste resin composition to obtain a pulverized material; and
sorting the thermoplastic resin B, and the thermoplastic resin C by means of UV.

In one embodiment of the present invention, the waste resin composition comprises: a thermoplastic resin B which comprises one or more selected from the group consisting of a thermoplastic resin B1 containing a structural unit (b-1) derived from a monomer represented by general formula (1-1) above, a thermoplastic resin B2 containing a structural unit (b-2) derived from a monomer represented by general formula (1-2) above, and a thermoplastic resin B3 containing a structural unit (b-3) derived from a monomer represented by general formula (1-3) above; and a thermoplastic resin D containing at least one structural unit selected from the group consisting of general formulae (7)-(10) above. In this embodiment, there is provided a method for producing a recycled resin from a waste resin composition, wherein

the waste resin composition comprises: a thermoplastic resin B which comprises one or more selected from the group consisting of a thermoplastic resin B1 containing a structural unit (b-1) derived from a monomer represented by general formula (1-1) above, a thermoplastic resin B2 containing a structural unit (b-2) derived from a monomer represented by general formula (1-2) above, and a thermoplastic resin B3 containing a structural unit (b-3) derived from a monomer represented by general formula (1-3) above; and a thermoplastic resin D containing at least one structural unit selected from the group consisting of general formulae (7)-(10) above, and
the method comprises:

pulverizing the waste resin composition to obtain a pulverized material; and
sorting the thermoplastic resin B, and the thermoplastic resin D by means of UV.

In one embodiment of the present invention, the waste resin composition comprises: a thermoplastic resin B

which comprises one or more selected from the group consisting of a thermoplastic resin B1 containing a structural unit (b-1) derived from a monomer represented by general formula (1-1) above, a thermoplastic resin B2 containing a structural unit (b-2) derived from a monomer represented by general formula (1-2) above, and a thermoplastic resin B3 containing a structural unit (b-3) derived from a monomer represented by general formula (1-3) above; and both of a thermoplastic resin C containing only a structural unit (c) derived from a monomer represented by general formula (2) above and a thermoplastic resin D containing at least one structural unit selected from the group consisting of general formulae (7)-(10) above, and In this embodiment, there is provided a method for producing a recycled resin from a waste resin composition, wherein

the waste resin composition comprises: a thermoplastic resin B which comprises one or more selected from the group consisting of a thermoplastic resin B1 containing a structural unit (b-1) derived from a monomer represented by general formula (1-1) above, a thermoplastic resin B2 containing a structural unit (b-2) derived from a monomer represented by general formula (1-2) above, and a thermoplastic resin B3 containing a structural unit (b-3) derived from a monomer represented by general formula (1-3) above; and both of a thermoplastic resin C containing only a structural unit (c) derived from a monomer represented by general formula (2) above and a thermoplastic resin D containing at least one structural unit selected from the group consisting of general formulae (7)-(10) above, and the method comprises:

pulverizing the waste resin composition to obtain a pulverized material; and
sorting the thermoplastic resin B, and the thermoplastic resin C and the thermoplastic resin D by means of UV.

Specific examples of the structural unit (b-1) derived from a monomer represented by formula (1-1) include structural units derived from 2,2'-bis(1-hydroxymethoxy)-1,1'-binaphthalene, 2,2'-bis(2-hydroxyethoxy)-1,1'-binaphthalene (also referred to as "BHEBN"), 2,2'-bis(3-hydroxypropyloxy)-1,1'-binaphthalene, and 2,2'-bis(4-hydroxybutoxy)-1,1'-binaphthalene. In one embodiment, the structural unit represented by formula (1-1) is a structural unit derived from 2,2'-bis(2-hydroxyethoxy)-1,1'-binaphthalene (BHEBN).

Examples of the thermoplastic resin B1 include, but are not limited to, PC-1, PC-2, PC-4, and PC-7 below.

[Chem 13]

PC-1

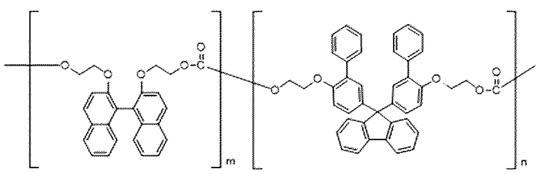

[Chem 14]

PC-2

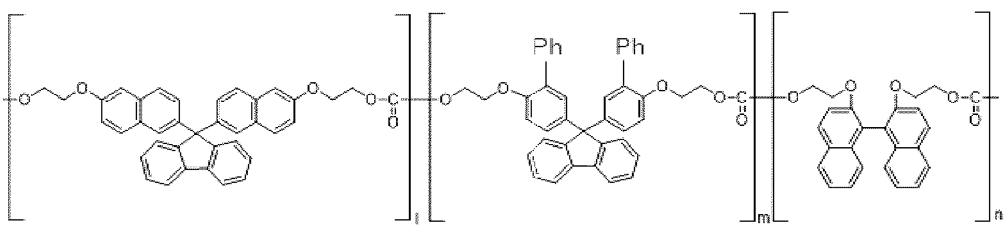

[Chem 15]

PC-4

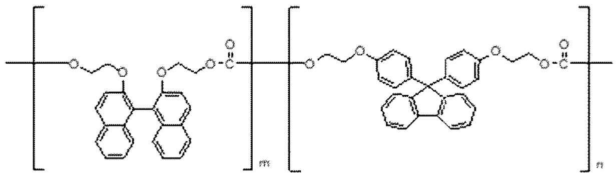

[Chem 16]

PC-7

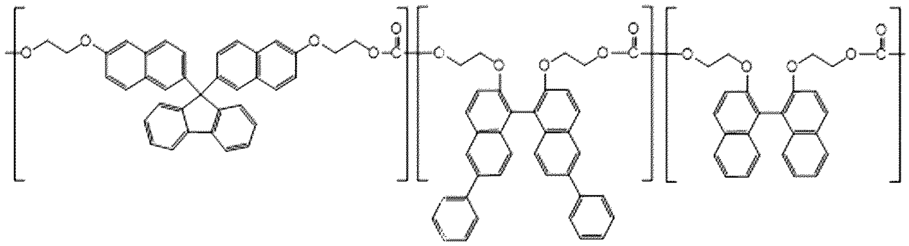

Specific examples of the structural unit (b-2) derived from a monomer represented by formula (1-2) include structural units derived from 2,2'-([1,1'-binaphthalene]-2,2'-diylbis(oxy))acetoacetic acid (BINOL-DC), and methyl ester, ethyl ester, and phenyl ester thereof.

Examples of the structural unit (b-2) derived from a monomer represented by formula (1-2), which forms the thermoplastic resin B2, include at least one of the structural units derived from BINOL-DC, and methyl ester, ethyl ester, and phenyl ester thereof.

[Chem 17]

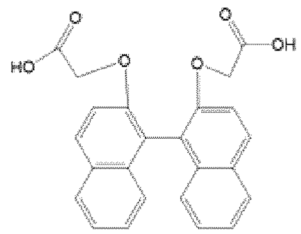

(BINOL-DC)

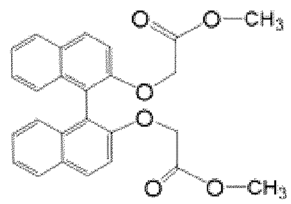

(Methyl ester of BINOL-DC)

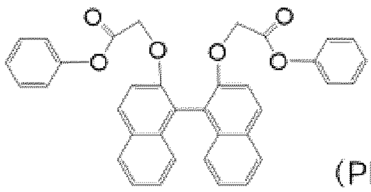

(Phenyl ester of BINOL-DC)

Specific examples of the structural unit (b-3) derived from a monomer represented by formula (1-3) include

structural units derived from naphthalene-2,6-dicarboxylic acid and methyl ester, ethyl ester, and phenyl ester thereof.

In some embodiments, a thermoplastic resin B1, a thermoplastic resin B2, and a thermoplastic resin B3 may contain a structural unit (b-1) derived from a monomer represented by formula (1-1), a structural unit (b-2) derived from a monomer represented by formula (1-2), or a structural unit (b-3) derived from a monomer represented by formula (1-3), respectively, and may also contain a structural unit (b-4) derived from a monomer represented by formula (1-4) below.

[Chem 17-2]

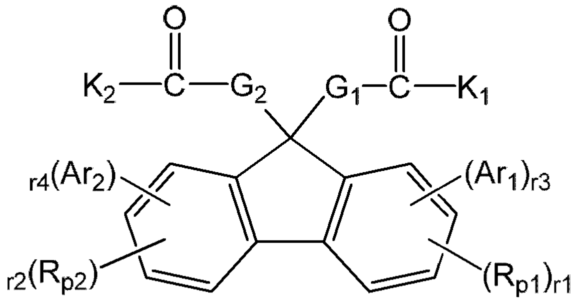

(1-4)

In formula (1-4),

- $G_1$ and $G_2$ each independently represent an optionally substituted alkylene group with 1-8 carbon atoms,
- $K_1$ and $K_2$ each independently represent a hydroxy group, an alkoxy group, or a halogen atom,
- $R_{p1}$ and $R_{p2}$ each independently represent a halogen atom, a cyano group, or an optionally substituted alkyl group with 1-8 carbon atoms,
- $Ar_1$ and $Ar_2$ each independently represent an optionally substituted phenyl or naphthyl group,
- $r_1$ and $r_2$ each independently represent an integer from 0 to 2, and
- $r_3$ and $r_4$ each independently represent an integer of 0 or 1.

In formula (1-4), $G_1$ and $G_2$ each independently represent an optionally substituted alkylene group with 1-8 carbon atoms. Examples of the alkylene group with 1-8 carbon atoms include methylene, ethylene, propylene, isopropylene, butylene, isobutylene, sec-butylene, tert-butylene, and pentylene. Of these, $G_1$ and $G_2$ are each preferably methylene, ethylene, propylene, butylene, isobutylene, or sec-butylene, more preferably methylene, ethylene, or propylene, still more preferably methylene or ethylene, and particularly preferably ethylene.

In formula (1-4), $K_1$ and $K_2$ each independently represent a hydroxy group, an alkoxy group, or a halogen atom. When $K_1$ and $K_2$ are each an alkoxy group, the number of carbon atoms is not particularly limited, and it is, for example, an alkoxy group with 1-20 carbon atoms.

In formula (1-4), $R_{p1}$ and $R_{p2}$ each independently represent a halogen atom, a cyano group, or an optionally substituted alkyl group with 1-8 carbon atoms.

In formula (1-4), $Ar_1$ and $Ar_2$ each independently represent an optionally substituted phenyl or naphthyl group.

In formula (1-4), $r_1$ and $r_2$ each independently represent an integer from 0 to 2, preferably 0 or 1.

In formula (1-4), $r_3$ and $r_4$ each independently represent an integer of 0 or 1.

Examples of the substituent in the "optionally substituted" groups in formula (1-4) above include, but are not particularly limited to, a halogen atom, a hydroxy group, a carboxy group, and a cyano group. These substituents may be contained alone or in combination of two or more.

In some embodiments, the thermoplastic resin preferably contains a resin having at least one structural unit selected from the group consisting of general formulae (1-4a) to (1-4c) below. General formula (1-4a) represents a 9,9-bis(carboxyalkyl)fluorene, which is a structural unit derived from a monomer in which $r_3$ and $r_4$ are each 0 in formula (1-4) above. General formula (1-4b) represents a 9,9-bis(carboxyalkyl)-diaryl fluorene, which is a structural unit derived from a monomer in which $r_3$ and $r_4$ are each 1, and $Ar_1$ and $Ar_2$ are each a phenyl group. General formula (1-4c) represents a 9,9-bis(carboxyalkyl)-dinaphthyl fluorene, which is a structural unit derived from a monomer in which $r_3$ and $r_4$ are each 1, and $Ar_1$ and $Ar_2$ are each a naphthyl group.

[Chem 17-3]

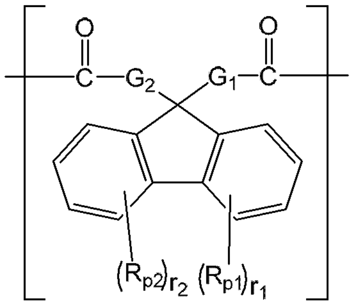

(1-4a)

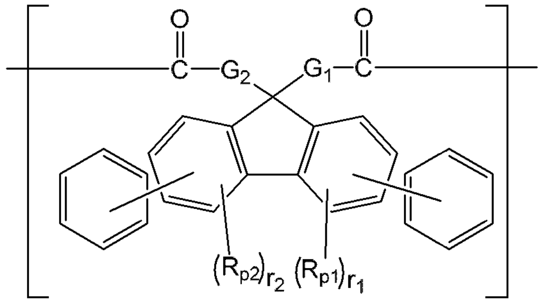

(1-4b)

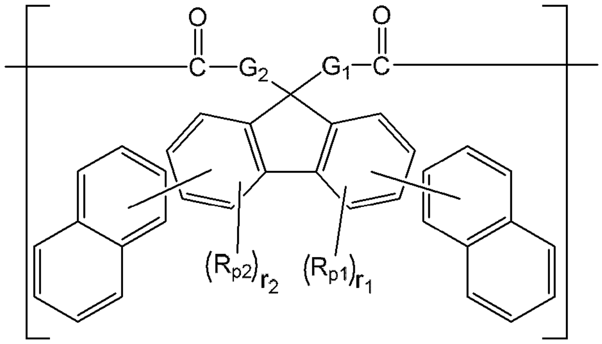

(1-4c)

In formulae (1-4a), (1-4b), and (1-4c) above, $G_1$ and $G_2$, $R_{p1}$ and $R_{p2}$, and $r_1$ and $r_2$ are synonymous with those in formula (1-4).

Specific examples of the monomer that leads to a structural unit represented by formula (1-4a) include 9,9-bis(carboxy C2-6 alkyl)fluorenes, preferably 9,9-bis(carboxy C2-4 alkyl)fluorenes, more preferably 9,9-bis(carboxy C2-3 alkyl)fluorenes, and alkyl esters and acid halides thereof. Examples include 9,9-bis(2-carboxyethyl)fluorene, 9,9-bis(2-carboxypropyl)fluorene, and alkyl esters and acid halides thereof, preferably 9,9-bis(2-carboxyethyl)fluorene, and alkyl esters and acid halides thereof. The alkyl group in the case of an alkyl ester is not particularly limited, and is, for example, an alkyl group with 1-20 carbon atoms.

Specific examples of the monomer that leads to a structural unit represented by formula (1-4b) include 9,9-bis(carboxy C2-6 alkyl)-diphenylfluorenes, preferably 9,9-bis(carboxy C2-4 alkyl)-diphenylfluorenes, more preferably 9,9-bis(carboxy C2-3 alkyl)-diphenylfluorenes, and alkyl esters and acid halides thereof. Examples include 9,9-bis(2-carboxyethyl)-1,8-diphenylfluorene, 9,9-bis(2-carboxyethyl)-2,7-diphenylfluorene, 9,9-bis(2-carboxyethyl)-3,6-diphenylfluorene, 9,9-bis(2-carboxyethyl)-4,5-diphenylfluorene, 9,9-bis(2-carboxypropyl)-2,7-diphenylfluorene, and alkyl esters and acid halides thereof. The alkyl group in the case of an alkyl ester is not particularly limited, and is, for example, an alkyl group with 1-20 carbon atoms.

Specific examples of the monomer that leads to a structural unit represented by formula (1-4c) include structural units derived from 9,9-bis(carboxy C2-6 alkyl)-dinaphthylfluorenes. In this case, the compound that leads to the aforementioned structural unit may be an alkyl ester, an acid halide, or an acid anhydride. Examples include structural units derived from compounds selected from 9,9-bis(2-carboxyethyl)-1,8-di(2-naphthyl)fluorene, 9,9-bis(2-carboxyethyl)-2,7-di(2-naphthyl)fluorene, 9,9-bis(2-carboxyethyl)-3,6-di(2-naphthyl)fluorene, 9,9-bis(2-carboxyethyl)-4,5-di(2-naphthyl)fluorene, 9,9-bis(2-carboxypropyl)-2,7-di(2-naphthyl)fluorene, 9,9-bis(2-carboxyethyl)-2,7-di(1-naphthyl) fluorene, and alkyl esters and acid halides thereof. The alkyl group in the case of an alkyl ester is not particularly limited, and is, for example, an alkyl group with 1-20 carbon atoms.

In some embodiments, the structural unit (b-4) comprises those derived from 9,9-bis(2-carboxyethyl)fluorene, or

an alkyl ester , which has 1-20 carbon atoms (preferably 1-8 carbon atoms, more preferably 1-6 carbon atoms), or an acid halide thereof.

In certain embodiments, the structural unit (b-4) comprises those derived from 9,9-bis(2-carboxyethyl)fluorene.

[Chem 17-4]

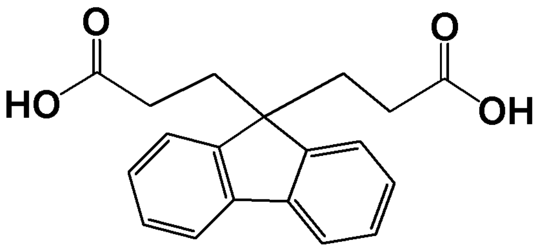

Specific examples of the structural unit represented by formula (2) include 9,9-bis(4-hydroxy-3-methylphenyl) fluorene (also referred to as "BCFL"), 9,9-bis(4-(2-hydroxyethoxy)phenyl)fluorene (also referred to as "BPEF"), 9,9-bis(4-hydroxyphenyl)fluorene, 9,9-bis[4-(2-hydroxyethoxy)-3-methylphenyl]fluorene), 9,9-bis[4-(2-hydroxyethoxy)-3-methylphenyl]fluorene, 9,9-bis[4-(2-hydroxyethoxy)-3-tert-buthylphenyl]fluorene, 9,9-bis[4-(2-hydroxyethoxy)-3-isopropylphenyl]fluorene, 9,9-bis[4-(2-hydroxyethoxy)-3-cyclohexylphenyl]fluorene, 9,9-bis[4-(2-hydroxyethoxy)-3-phenylphenyl] fluorene (also referred to as "BPPEF"), bisphenol A (also referred to as "BPA"), bisphenol AP, bisphenol AF, bisphenol B, bisphenol BP, bisphenol C, bis(4-hydroxyphenyl)-2,2-dichloroethylene, bisphenol E, bisphenol F, bisphenol G, bisphenol M (also referred to as "BPM"), bisphenol S, bisphenol P, bisphenol PH, bisphenol TMC, bisphenol P-AP (4,4'-(1-phenylethylidene)bisphenol), bisphenol P-CDE (4,4'-cyclododecylidenebisphenol), bisphenol P-HTG (4,4'-(3,3,5-trimethylcyclohexylidene)bisphenol), bisphenol P-MIBK (4,4'-(1,3-dimethylbutylidene)bisphenol), bisphenol PEO-FL (bisphenoxyethanol fluorene), bisphenol P-3MZ (4-[1-(4-hydroxyphenyl)-3-methylcyclohexyl]phenol), bisphenol OC-FL (4,4'-[1-[4-[1-(4-hydroxyphenyl)-1-methylethyl]phenyl]ethylidene]bisphenol), bisphenol Z, BP-2EO (2,2'-[[1,1'-biphenyl]-4,4'-diylbis(oxy)bisethanol), S-BOC (4,4'-(1-methylethylidene)bis(2-methylphenol), and TrisP-HAP (4,4',4''-ethylidene trisphenol). In one embodiment, the structural unit represented by formula (2) is a structural unit derived from a compound selected from 9,9-bis[4-(2-hydroxyethoxy)phenyl]fluorene (BPEF) and 9,9-bis[4-(2-hydroxyethoxy)-3-phenylphenyl]fluorene (BPPEF).

[Chem 18]

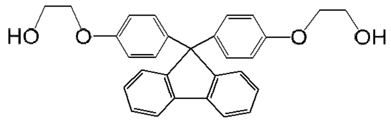

(BPEF)

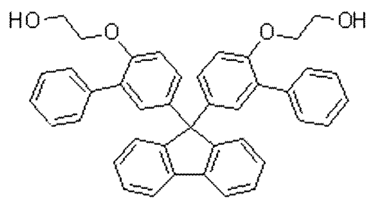

(BPPEF)

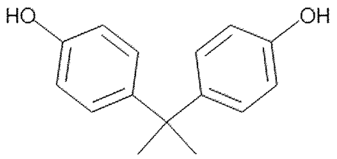

(BPA)

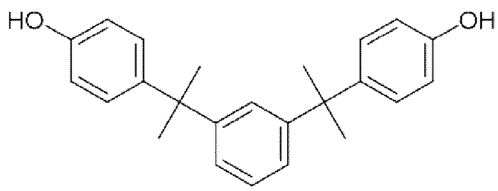

(BPM)

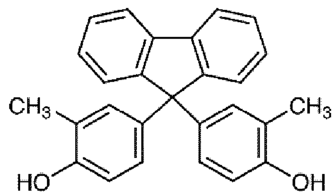

(BCFL)

Examples of the thermoplastic resin C include, but are not limited to, PC-3, PC-5, and PC-6 below.

[Chem 19]

PC-3

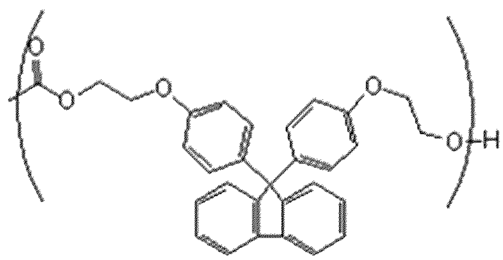

[Chem 20]

PC-5, PC-6 (which have different copolymerization ratios)

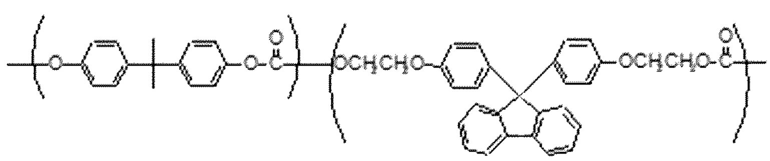

Examples of the thermoplastic resin D containing at least one structural unit selected from the group consisting of general formulae (7)-(9) include aliphatic olefin resins such as COC (cyclo-olefin copolymer) and COP (cyclo-olefin polymer). Examples of such aliphatic olefin resins include, but are not limited to, APEL (registered trademark) from Mitsui Chemicals Inc., TOPAS (registered trademark) from Polyplastics Co., Ltd., and ZEONEX (registered trademark) from Zeon Corporation.

Specific examples of the structural unit represented by formula (10) include structural units derived from decahydro-1,4:5,8-dimethanonaphthalene-2-methoxycarbonyl-6 (7)-methanols. Examples include structural units derived from compounds selected from decahydro-1,4:5,8-dimethanonaphthalene-2-methoxycarbonyl-6-methanol, decahydro-1,4:5,8-dimethanonaphthalene-2-methoxycarbonyl-7-methanol, 2-methyl-decahydro-1,4:5,8-dimethanonaphthalene-2-methoxycarbonyl-6-methanol, 2-methyl-decahydro-1,4:5,8-dimethanonaphthalene-2-methoxycarbonyl-7-methanol, 2-ethyl-decahydro-1,4:5,8-dimethanonaphthalene-2-methoxycarbonyl-6-methanol, and 2-ethyl-decahydro-1,4:5,8-dimethanonaphthalene-2-methoxycarbonyl-7-methanol.

In one embodiment of the present invention, the thermoplastic resin D, when it contains a structural unit

represented by formula (10), may be selected from a polycarbonate resin, a polyester resin, or a polyester carbonate. In one embodiment of the present invention, the thermoplastic resin D containing a structural unit represented by formula (10) comprises a polycarbonate resin. In another embodiment of the present invention, the thermoplastic resin D containing a structural unit represented by formula (10) comprises a polyester resin. In yet another embodiment of the present invention, the thermoplastic resin D containing a structural unit represented by formula (10) comprises a polyester carbonate resin. In a preferred embodiment of the present invention, the thermoplastic resin D containing a structural unit represented by formula (10) is a polycarbonate resin.

In another embodiment of the present invention, the waste resin composition comprises a thermoplastic resin C containing only a structural unit (c) derived from a monomer represented by general formula (2) below, and a resin T containing a structural unit derived from naphthalene dicarboxylic acid, terephthalic acid, or a derivative thereof. In this embodiment, there is provided a method for producing a recycled resin from a waste resin composition, wherein

the waste resin composition comprises a thermoplastic resin C containing only a structural unit (c) derived from a monomer represented by general formula (2) below, and a resin T containing a structural unit derived from naphthalene dicarboxylic acid, terephthalic acid, or a derivative thereof, and
the method comprises:

pulverizing the waste resin composition to obtain a pulverized material; and
sorting the thermoplastic resin C and the resin T by means of UV.

[Chem 21]

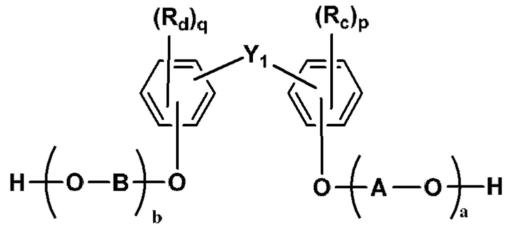

(2)

In general formula (2),

$R_c$ and $R_d$ are each independently selected from a halogen atom, an optionally substituted alkyl group with 1-20 carbon atoms, an optionally substituted alkoxy group with 1-20 carbon atoms, an optionally substituted cycloalkyl group with 5-20 carbon atoms, an optionally substituted cycloalkoxy group with 5-20 carbon atoms, an optionally substituted aryl group with 6-20 carbon atoms, an optionally substituted heteroaryl group with 3-20 carbon atoms containing one or more heteroatoms selected from O, N, and S, an optionally substituted aryloxy group with 6-20 carbon atoms, and $-C{\equiv}C-R_h$,
$R_h$ represents an optionally substituted aryl group with 6-20 carbon atoms or an optionally substituted heteroaryl group with 3-20 carbon atoms containing one or more heteroatoms selected from O, N, and S,
p and q each independently represent an integer from 0 to 5, and
$Y_1$ is a single bond, -O-, -S-, -SO-, $-SO_2-$, -CO-, or a divalent group represented by any of general formulae (3)-(6) below;

[Chem 22]

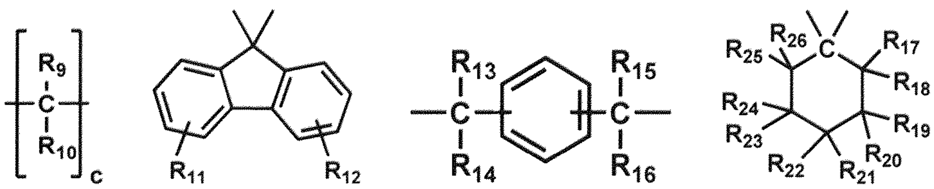

(3) (4) (5) (6)

in general formulae (3)-(6),

$R_9$ and $R_{10}$ each independently represent hydrogen, a halogen, an optionally substituted alkyl group with 1-20 carbon atoms, an optionally substituted alkoxy group with 1-5 carbon atoms, an optionally substituted aryl group with 6-12 carbon atoms, an optionally substituted aralkyl group with 7-17 carbon atoms, or an optionally substituted alkenyl group with 2-15 carbon atoms, or

$R_9$ and $R_{10}$ bind with each other to form a carbon ring having 3-20 carbon atoms or a heterocyclic ring having 1-20 carbon atoms,

c represents an integer from 0 to 20,

$R_{11}$ and $R_{12}$ each independently represent hydrogen, a halogen, an optionally substituted alkyl group with 1-20 carbon atoms, an optionally substituted alkoxy group with 1-5 carbon atoms, an optionally substituted aryl group with 6-12 carbon atoms, an optionally substituted aralkyl group with 7-17 carbon atoms, or an optionally substituted alkenyl group with 2-15 carbon atoms, or

$R_{11}$ and $R_{12}$ bind with each other to form a carbon ring having 3-20 carbon atoms or a heterocyclic ring having 1-20 carbon atoms,

$R_{13}$-$R_{16}$ each independently represent hydrogen, a halogen, an optionally substituted alkyl group with 1-20 carbon atoms, an optionally substituted alkoxy group with 1-5 carbon atoms, an optionally substituted aryl group with 6-12 carbon atoms, an optionally substituted aralkyl group with 7-17 carbon atoms, or an optionally substituted alkenyl group with 2-15 carbon atoms, or

$R_{13}$ and $R_{14}$ or $R_{15}$ and $R_{16}$ bind with each other to form a carbon ring having 3-20 carbon atoms or a heterocyclic ring having 1-20 carbon atoms,

$R_{17}$-$R_{26}$ is each independently hydrogen or an alkyl group with 1-3 carbon atoms, where at least one of $R_{17}$-$R_{26}$ is an alkyl group with 1-3 carbon atoms,

A and B each independently represent a saturated hydrocarbon group with 1-5 carbon atoms, and

a and b each independently represent an integer from 0 to 10.

The aforementioned resin T may be, but is not particularly limited to, a polyester obtained from BPEF (bisphenoxyethanol fluorene, 9,9-bis[4-(2-hydroxyethoxy)phenyl]fluorene) and naphthalene dicarboxylic acid, or a polyester carbonate obtained from BPEF, terephthalic acid, and fluorene dipropionic acid.

According to the present invention, the waste resin composition may be a material, such as a sprue or a runner, that is discharged after molding, or it may be an unused or used resin composition.

In one embodiment of the present invention, the thermoplastic resin B may be selected from a polycarbonate resin, a polyester resin, or a polyester carbonate resin. In one embodiment of the present invention, the thermoplastic resin B comprises a polycarbonate resin. In another embodiment of the present invention, the thermoplastic resin B comprises a polyester resin. In yet another embodiment of the present invention, the thermoplastic resin B comprises a polyester carbonate resin. In a preferred embodiment of the present invention, the thermoplastic resin B is a polycarbonate resin.

In one embodiment of the present invention, the thermoplastic resin C may be selected from a polycarbonate resin, a polyester resin, or a polyester carbonate. In one embodiment of the present invention, the thermoplastic resin C comprises a polycarbonate resin. In another embodiment of the present invention, the thermoplastic resin C comprises a polyester resin. In yet another embodiment of the present invention, the thermoplastic resin C comprises a polyester carbonate resin. In a preferred embodiment of the present invention, the thermoplastic resin C is a polycarbonate resin.

In one embodiment of the present invention, the thermoplastic resin B and the thermoplastic resin C may each independently be selected from a polycarbonate resin, a polyester resin, or a polyester carbonate. In one embodiment of the present invention, the thermoplastic resin B and the thermoplastic resin C each comprise a polycarbonate resin. In another embodiment of the present invention, the thermoplastic resin B and the thermoplastic resin C each comprise a polyester resin. In yet another embodiment of the present invention, the thermoplastic resin B and the thermoplastic resin C each comprise a polyester carbonate resin. In a preferred embodiment of the present invention, the thermoplastic resin B and the thermoplastic resin C are polycarbonate resins.

(Pulverization step)

According to the method of the present invention, the waste resin composition is pulverized to obtain a pulverized material, and this is performed by pulverizing sprues, runners, etc., which are collected as waste resin materials, using a crusher or the like. Sprues, runners, etc. can be pulverized using a uniaxial crusher, a biaxial crusher, a triaxial crusher, a cutter mill, or the like. The pulverized material obtained by pulverization may be in the form of, for example, flakes, powder, or a mass. However, since sprues, runners, etc. are mostly as thin as 1 cm or less, the majority of the pulverized material is usually in the form of flakes or fine powder. A flake-like pulverized material refers to a thin or flat matter with a thickness of 5 mm or less, and a fine powder-like pulverized material refers to a pulverized material with a size of 1 mm or less.

<Sorting by means of UV>

According to the method of the present invention, the thermoplastic resin B and the thermoplastic resin C are sorted by means of UV, and this is performed by feeding the pulverized material into UV sorting equipment. For example, an air gun can be set to target pulverized materials that do not develop color upon UV irradiation, and not to target pulverized materials that do develop color upon UV irradiation, so as to allow for the sorting of the pulverized materials that do not develop color upon UV irradiation and the pulverized materials that develop color upon UV irradiation. Whether or not coloration is caused by UV may be judged visually or by using a detector. Any detector can be used, as long as it can emit UV light, record the position of the pulverized product that glows or does not glow in comparison with a reference color plate using a camera, and shoot the object to be removed with the air gun based on this position information. Examples of such a detector include, but are not limited to, a leo sorter.
The conditions for sorting by means of UV can be set suitably depending on the resin to be sorted.
For example, the wavelength used for irradiation can be selected to be a wavelength at which the resin to be sorted emits light and the impurity resin does not. The discharged amount, sensitivity, and conveyor belt speed in the UV sorting equipment can also be set suitably.
A reference color plate may be used in the UV sorting equipment. For example, white paper that develops color by UV light can be used to take advantage of the fluorescent brightener contained in this white paper, which glows blue when irradiated with UV light, so that a "non-glowing resin" can be shot by comparison based on the "glowing blue" color. When there is no white paper, i.e., when a reference color plate is not used, a "black" base, i.e., a dark state, can be used to eject blue glowing or non-glowing (weakly-glowing) objects upon UV irradiation.
In the method of the present invention, the thermoplastic resin B emits light upon UV irradiation because it contains a naphthalene ring, while the thermoplastic resin C, the thermoplastic resin D, and the resin T emit no or weak light upon UV irradiation because they lack a naphthalene ring. Based on this, the thermoplastic resin B can be sorted from the thermoplastic resin C, the thermoplastic resin D, and the resin T by means of UV.

<Pretreatment step>

According to the method of the present invention, specific gravity sorting that uses the difference in specific gravities of a plurality of resins can be used as a pretreatment before the aforementioned sorting. Examples of such a pretreatment include, but are not limited to: winnowing separation method, in which the pulverized materials are sorted by wind force; a method in which the pulverized materials are immersed in a liquid, such as water, and sorted according to the difference in specific gravities of the pulverized materials relative to the liquid; and a method in which a certain vibration is applied to the pulverized materials to separate and sort them according to the difference in different specific gravities. Especially when the above pulverized material is fine powder or flat matter, a pretreatment can be performed to improve the sorting efficiency of the UV sorting equipment.
Winnowing separation includes, for example, a method in which the pulverized materials are exposed to airflow to be sorted into the following groups and collected in a separator capable of generating a rotating airflow inside: specifically, those with a high specific gravity or a small specific surface area that naturally fall by their own weight, and those with a low specific gravity or a large specific surface area that are swept up by the airflow.
According to this method, pulverized resins with a high specific gravity or a small specific surface area naturally fall by their own weight while pulverized resins with a low specific gravity or a large specific surface area are swept up. Therefore, it is possible to sort and collect resins with a high specific gravity or a small specific surface area, and resins with a low specific gravity or a large specific surface area.
In such winnowing separation, the same operation may be repeated for the same pulverized material. For example, the naturally fallen material may be further subjected to winnowing separation to increase the content of resins with high specific gravities or small specific surface areas in a recycled resin with a high specific gravity or a small specific surface area.
In a preferred embodiment of the present invention, the method of the present invention comprises winnowing separation of the pulverized material. The winnowing separation may be performed once (1 pass), twice (2 passes), or more times in a row.

<Granulation step>

The collected crude recycled resin is preferably granulated into pellets to facilitate handling during molding, processing, and the like.
In the granulation step, the pulverized material is preferably plasticized and granulated by melt blending. While examples of the granulation equipment for plasticization and granulation include a single-screw extruder, a twin-screw extruder, and a multi-screw extruder, any known equipment can be used. The shape of the pellets is preferably cylindrical,

spherical, or ellipsoidal.

Granulation is preferably performed, for example, by extruding the plasticized recycled resin into a strand and cutting it with a pelletizer while cooling in a water tank to make pellets. Pellets removed from the water tank are usually dried to remove water from their surfaces.

The crude recycled resin collected after the UV treatment can be granulated as described above and then reused.

Alternatively, the crude recycled resin collected after the UV treatment can be subjected to the following steps: (i) a step of removing impurities contained in the waste resin composition; and (ii) a step of producing a recycled resin.

<Step (i)>

Step (i) is a step of removing impurities from the waste composition. Molding waste contained in the waste composition may contain two or more resins. **In** addition, the above waste composition may also contain an additive, a decomposition product of the resin, a decomposition product of the additive, and the like. From the viewpoint of producing a recycled resin with excellent physical properties, it is desirable to remove impurities from the waste composition.

The removal of impurities from the waste composition is not limited to any particular method, and examples include a method that exploits the difference in physical properties between the target resin and the impurity, and a method that exploits the difference in chemical properties between the target resin and the impurity.

Examples of the method that exploits the difference in physical properties between the target resin and the impurity include a method using magnetic force, a method using wind force, a method using a sieve, a method using specific gravity, and a method using buoyancy.

For example, if the impurity is a metal, the impurity can be removed by a method using magnetic force. Specifically, a magnet or a metal detector can be used to remove metals that may be contained in the waste composition.

Other methods that may be applied include a method of removing impurities by exploiting difference in buoyancy using brine, a method of removing impurities by exploiting difference in adsorption using activated carbon, and a method of removing impurities by exploiting difference in specific gravity using a hydrocyclone treatment.

Examples of the method that exploits the difference in chemical properties between the target resin and the impurity include a method of depolymerizing the target resin.

For example, a resin having a structural unit derived from at least one monomer selected from the group consisting of general formulae (1-1), (1-2), (2), and (10) above can be depolymerized by a treatment with an aqueous alkaline solution to obtain at least one dihydroxy compound (depolymerized monomer) selected from the group consisting of general formulae (1-1), (1-2), (2), and (10) above.

On the other hand, an impurity resin having a structural unit derived from at least one monomer selected from the group consisting of general formulae (7)-(9) is not depolymerized by the treatment with an aqueous alkaline solution.

Accordingly, if the waste composition contains a resin having a structural unit derived from at least one monomer selected from the group consisting of general formulae (1-1), (1-2), (2), and (10) as well as an impurity resin having a structural unit derived from at least one monomer selected from the group consisting of general formulae (7)-(9), only the resin having a structural unit derived from at least one monomer selected from the group consisting of general formulae (1-1), (1-2), (2), and (10) will be depolymerized upon a treatment with an aqueous alkaline solution.

The impurity resin can be removed because the resulting dihydroxy compound (depolymerized monomer) has significantly different physical properties from those of the impurity resin having a structural unit derived from at least one monomer selected from the group consisting of general formulae (7)-(9).

Note that the aforementioned alkaline treatment is not particularly limited and can be performed by any known method. For example, the aforementioned alkaline treatment can be performed by adding the waste composition and an aqueous alkaline solution to a reaction solvent and allowing them to react.

Examples of the above reaction solvent include, but are not particularly limited to, an aliphatic hydrocarbon-based solvent and an aromatic hydrocarbon-based solvent.

Examples of the above aliphatic hydrocarbon-based solvent include, but are not particularly limited to, pentane, hexane, heptane, octane, nonane, decane, cyclohexane, and cyclodecane.

Examples of the above aromatic hydrocarbon-based solvent include, but are not particularly limited to, toluene, xylene, and mesitylene.

Of these, the reaction solvent is preferably an aromatic hydrocarbon-based solvent, and more preferably toluene or xylene. Note that the above reaction solvents may be used alone or in combination of two or more.

While the amount of the reaction solvent used is not particularly limited, it is preferably 30-2,000 parts by mass, more preferably 40-1,500 parts by mass, and still more preferably 100-1,000 parts by mass, relative to 100 parts by mass of the waste composition. The reaction solvent is preferably used in an amount of 30 parts by mass or more to ensure that the organic components of the waste composition are sufficiently dissolved in the reaction solvent, resulting in high reaction efficiency. On the other hand, the amount of the reaction solvent used is preferably 2,000 parts by mass or less so that the reaction time is shortened.

Meanwhile, the aqueous alkaline solution contains a metal oxide and water.

Examples of the above metal oxide include, but are not particularly limited to: alkali metals, such as sodium hydroxide, potassium hydroxide, and rubidium hydroxide; and alkaline earth metals, such as calcium hydroxide and barium hydroxide. Of these, the metal oxide is preferably an alkali metal, more preferably sodium hydroxide or potassium hydroxide, and still more preferably potassium hydroxide. Note that these metal oxides may be used alone or in combination of two or more.

While the amount of the above metal oxide used is not particularly limited, it is preferably 1.5-10 mol, more preferably 2-8 mol, and still more preferably 2-4 mol, per mol of carbonate bond in the polycarbonate resin. The amount of the metal oxide used is preferably 1.5 mol or more so that the depolymerization can be carried out sufficiently. On the other hand, the amount of the metal oxide used is preferably 10 mol or less so that the production cost can be reduced.

The concentration of the metal oxide in the aqueous alkaline solution is preferably 10-60% by mass, more preferably 15-55% by mass, and still more preferably 20-50% by mass, relative to the total mass of the aqueous alkaline solution. The concentration of the metal oxide is preferably 10% by mass or more so that the depolymerization reaction rate can be increased. On the other hand, the concentration of the metal oxide is preferably 60% by mass or less so that the aqueous alkaline solution does not turn into a slurry and the reaction proceeds more easily.

While the treatment temperature (depolymerization reaction temperature) is not particularly limited, it is preferably 120°C or lower, more preferably 100°C or lower, and still more preferably 30-90°C. The treatment temperature is preferably 120°C or lower so that side reactions can be prevented.

<Step (ii)>

Step (ii) is a step of producing a recycled resin.

In step (ii) above, when impurities are removed using a method that exploits the difference in physical properties between the target resin and the impurities, the resin obtained after the impurity removal serves as the recycled resin because the composition of the target resin remains unchanged.

On the other hand, when impurities are removed by a method that exploits the difference in chemical properties between the target resin and the impurities, a recycled resin can be produced by polymerizing the depolymerized monomer of the target resin. In this case, the recycled resin produced may be the same as or different from the target resin contained in the waste composition.

The method for producing a recycled resin by polymerizing the depolymerized monomer of the target resin is not particularly limited and the recycled resin can be produced by a known method. For example, when the depolymerized monomer is at least one dihydroxy compound selected from the group consisting of monomers derived from general formulae (1-1), (1-2), (2), and (10) above, a recycled resin can be produced by subjecting the dihydroxy compound and a carbonate diester to a solution condensation method in the presence of a basic compound catalyst and/or a transesterification catalyst or in the absence of a catalyst.

Examples of the carbonate diester include, but are not particularly limited to, diphenyl carbonate, ditolyl carbonate, bis(chlorophenyl) carbonate, m-cresyl carbonate, dimethyl carbonate, diethyl carbonate, dibutyl carbonate, and dicyclohexyl carbonate. Of these, diphenyl carbonate is preferred.

The amount of the carbonate diester compound used is preferably 0.97-1.20 mol, more preferably 0.98-1.10 mol, and still more preferably 1.00-1.10 mol, per mol of the dihydroxy compound.

Examples of the basic compound catalyst include, but are not particularly limited to, alkali metal compounds, alkaline earth metal compounds, and nitrogen-containing compounds.

Examples of the alkali metal compound include, but are not particularly limited to, organic acid salts, inorganic salts, oxides, hydroxides, hydrides, and alkoxides of alkali metals. Specific examples include sodium hydroxide, potassium hydroxide, cesium hydroxide, lithium hydroxide, sodium bicarbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium borohydride, sodium phenylborate, sodium benzoate, potassium benzoate, cesium benzoate, lithium benzoate, disodium hydrogen phosphate, dipotassium hydrogen phosphate, dilithium hydrogen phosphate, disodium phenyl phosphate, and disodium salt, dipotassium salt, dicesium salt or dilithium salt of bisphenol A, and sodium salt, potassium salt, cesium salt or lithium salt of phenol.

Examples of the alkaline earth metal compound include, but are not particularly limited to, organic acid salts, inorganic salts, oxides, hydroxides, hydrides or alkoxides of alkaline earth metal compounds. Specific examples include magnesium hydroxide, calcium hydroxide, strontium hydroxide, barium hydroxide, magnesium bicarbonate, calcium bicarbonate, strontium bicarbonate, barium bicarbonate, magnesium carbonate, calcium carbonate, strontium carbonate, barium carbonate, magnesium acetate, calcium acetate, strontium acetate, barium acetate, magnesium stearate, calcium stearate, calcium benzoate, and magnesium phenyl phosphate.

Examples of the nitrogen-containing compound include, but are not particularly limited to, quaternary ammonium hydroxides, and salts and amines thereof. Specific examples include: quaternary ammonium hydroxides having an alkyl

group, an aryl group, etc., such as tetramethylammonium hydroxide, tetraethylammonium hydroxide, tetrapropylammonium hydroxide, tetrabutylammonium hydroxide, and trimethylbenzylammonium hydroxide; tertiary amines, such as triethylamine, dimethylbenzylamine, and triphenylamine; secondary amines, such as diethylamine and dibutylamine; primary amines, such as propylamine and butylamine; imidazoles, such as 2-methylimidazole, 2-phenylimidazole, and benzoimidazole; and ammonia, tetramethylammonium borohydride, tetrabutylammonium borohydride, tetrabutylammonium tetraphenylborate, and tetraphenylammonium tetraphenylborate.

Examples of the transesterification catalyst include salts of zinc, tin, zirconium, and lead. Specific examples include zinc acetate, zinc benzoate, zinc 2-ethylhexanoate, tin(II) chloride, tin(IV) chloride, tin(II) acetate, tin(IV) acetate, dibutyl tin dilaurate, dibutyl tin oxide, dibutyl tin dimethoxide, zirconium acetylacetonate, zirconium oxyacetate, zirconium tetrabutoxide, lead(II) acetate, and lead(IV) acetate.

The basic compound catalysts and the transesterification catalysts mentioned above may be used alone or in combination of two or more.

The amount of the basic compound catalyst or the transesterification catalyst used (the total amount when they are used in combination) is preferably $1\times10^{-9}$-$1\times10^{-3}$ mol, and more preferably $1\times10^{-7}$-$1\times10^{-4}$ mol, per mol of the dihydroxy compound.

In a melt polycondensation method, a dihydroxy compound and a carbonate diester are melted in a reaction vessel, and then the reaction is preferably carried out while retaining the produced monohydroxy compound. In order to retain the monohydroxy compound, the reactor can be closed, or the pressure can be controlled by reducing the pressure, increasing the pressure, or the like.

According to the method for producing a recycled resin of the present invention, steps other than those described above may be implemented, and a washing step may be performed to remove contents attached to the inside of a multilayer hollow container. Washing is preferably done by rinsing with a liquid, and washing may be done with water, an aqueous alkaline solution, or both.

Washing may be done before or after pulverizing the multilayer hollow container into a pulverized material, but it is preferable to do so before any of the granulation, crystallization, or solid-phase polymerization. Furthermore, the washing step may be performed simultaneously with the pulverization step with a wet crusher, which is a crusher that performs washing and pulverization at the same time.

If a washing step is performed, a drying step may be performed after the washing step. The drying step reduces the water content of the recycled resin obtained by this method, and makes it possible to provide a high-quality recycled resin with high thermal stability, etc. The drying step can be performed, for example, by blowing air or hot air using a dryer.

When the method for producing a recycled resin comprises a step of removing an impurity resin, the content of the impurity resin in the resulting recycled resin is preferably less than 1% by mass, more preferably less than 0.8% by mass, and still more preferably less than 0.6% by mass. Thus, the quality of the recycled resin is improved by reducing the content of the impurity resin.

EXAMPLES

Hereinafter, the present invention will be described more specifically by means of examples and comparative examples. The present invention, however, is not intended to be limited to the following examples.

<Waste resin composition>

Thermoplastic resins contained in the waste resin compositions used in the examples and comparative examples were as follows.

[Chem 23]

PC-1

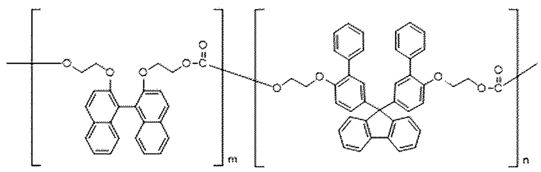

[Chem 24]

PC-2

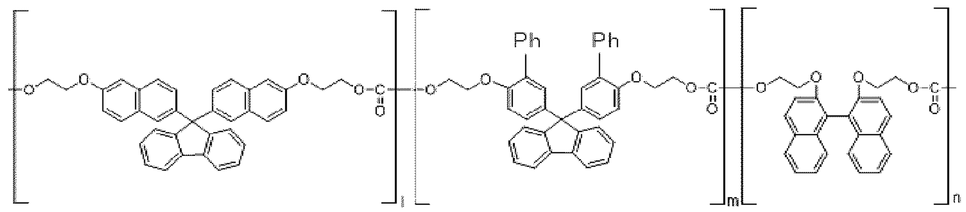

[Chem 25]

PC-3

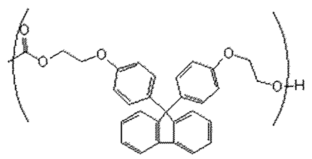

[Chem 26]

PC-4

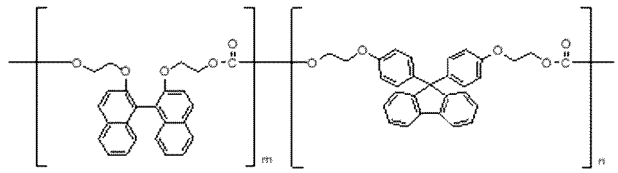

[Chem 27]

PC-5, PC-6 (which have different copolymerization ratios)

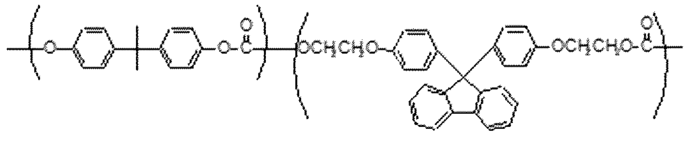

[Chem 28]

PC-7

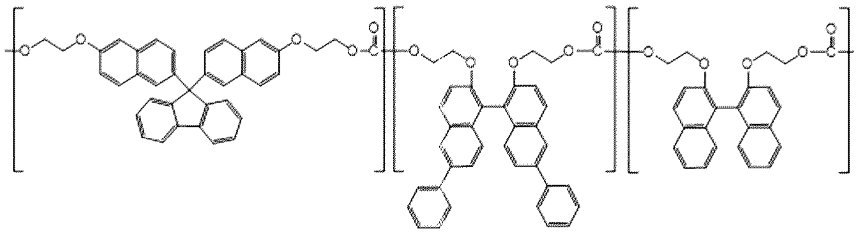

[Chem 29]

PC-8

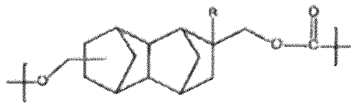

(in the formula, R is H, $CH_3$, or $C_2H_5$)

<Winnowing separation/pretreatment>

(Example a)

After PC-1 was molded, the discharged sprues and runners were pulverized using a crusher to obtain a pulverized material. The pulverized material contained 10% by mass of fine powder of 850 μm or less. The pulverized material was blown with air at a rate of 600 kg/hr using an inverter set to 22 Hz to remove fine powder (first pass of winnowing separation). The resulting resin (pulverized material) was further blown with air under the same conditions to remove fine powder (second pass of winnowing separation). The winnowing separation removed fine powder as well as other flat matter, such as lens fragments. The results for the obtained resin (pulverized material) are shown in Table 1.

(Examples b and c)

The winnowing separation was performed in the same manner as in Example a, except that the resin type and winnowing separation conditions were changed as shown in Table 1.

[Table 1]

| No. | Resin | Fine powder size before winnowing separation | | Treated amount (kg/h) | Number of times (Number of passes) | Inverter (Hz) | Before sorting (kg) | Quality product (kg) | Ejected product (kg) | Yield (%) | Yield after two passes (%) | Fine powder size after winnowing separation | |
|---|---|---|---|---|---|---|---|---|---|---|---|---|---|
| | | 1,180 μm or more (mass%) | 850 μm or less (mass%) | | | | | | | | | 1,180 μm or more (mass%) | 850 μm or less (mass%) |
| Example a | PC-1 | 90 | 10 | 600 | 1 | 22 | 10 | 8.48 | 1.41 | 86 | - | 99.9 | 0.1 |
| | | 99.9 | 0.1 | 600 | 2 | | 7.48 | 7.16 | 0.31 | 96 | 82 | 100 | 0 |
| Example b | PC-1 | 90 | 10 | 600 | 1 | 29 | 10 | 5.57 | 4.37 | 56 | - | 99.8 | 0.2 |
| | | 99.8 | 0.2 | 600 | 2 | | 4.57 | 3.12 | 1.45 | 68 | 41 | 99.9 | 0.1 |
| Example c | PC-5 | 90 | 10 | 600 | 1 | 22 | 10 | 7.52 | 2.43 | 76 | - | 99.9 | 0.1 |
| | | 99.9 | 0.1 | 600 | 2 | | 6.52 | 6.13 | 0.4 | 94 | 71 | 100 | 0 |

<Preparation of samples for UV sorting test>

Pulverized material PC-1 (9,950 g) obtained by the aforementioned winnowing separation (Example a) and PC-5 (50 g) obtained by the aforementioned winnowing separation (Example c) were placed in a blender. Specifically, PC-5 was placed in the blender so that its concentration in the sample was 5,000 ppm. The resultant was mixed in the blender for 15 minutes to give a test sample.

<UV sorting>

(Example 1)

The aforementioned test sample was placed on a conveyor belt so that it laid flat and was continuously fed into UV sorting equipment. An air gun was set so as to target the pulverized product (PC-5), which does not develop color when exposed to UV light, and not to target the pulverized product (PC-1), which develop color when exposed to UV light, thereby obtaining a purified pulverized product of PC-1.

Note that white paper that develops color by UV light was used as a reference color plate (background). This white paper takes advantage of the fluorescent brightener contained therein, which glows blue when irradiated with UV light, so that a "non-glowing resin" was shot by comparison based on the "glowing blue" color. The conditions of the UV sorting equipment and the physical properties of the obtained resin are shown in Table 2.

(Examples 2 to 9)

Purified pulverized products of PC-1 were obtained in the same manner as in Example 1, except that the concentration of PC-5 and UV sorting conditions were set as shown in Table 2. The conditions of the UV sorting equipment and the physical properties of the obtained resin are shown in Table 2.

(Examples A to I)

Purified pulverized products of resins were obtained in the same manner as in Example 1, except that the concentration of the resins and UV sorting conditions were set as shown in Tables 3-1, 3-2, 3-3, 3-4, 4-1, 4-2, 4-3, and 4-4. The conditions of the UV sorting equipment and the physical properties of the obtained resins are shown in Tables 3-1, 3-2, 3-3, 3-4, 4-1, 4-2, 4-3, and 4-4.

(Examples 1-1, 2-1, and 3-1)

The same processes were performed as in Examples 1 to 3, respectively, except that white paper as the reference color plate (background) was not used. When there is no white paper, a "black" base, i.e., a dark state, can be used to eject blue glowing or non-glowing (weakly-glowing) objects upon UV irradiation. The conditions of the UV sorting equipment and the physical properties of the pulverized products are shown in Table 2.

<Removal rate>

50 g of the pulverized product sample was laid flat and irradiated with ultraviolet light (UV-C) at 222 nm. Those that visually glowed (PC-1, PC-2, PC-4, and PC-7) and those that did not glow (COC (cyclo-olefin copolymer), PC-3, PC-5, PC-6, and PC-8) were sorted, and the object to be removed (PC-5) was visually picked up and weighed. The removal rate was calculated according to Equation 1 below.

$$\text{Removal rate (\%)} = \text{Weight of object picked up for removal}/50 \times 100 \quad \text{(Equation 1)}$$

<Yield (%)>

Yield (%) = Amount of purified pulverized product (kg)/Amount treated (kg) × 100

<Concentration of object to be removed in purified pulverized product (ppm)>

Concentration of object to be removed in purified pulverized product (ppm) = Amount of object to be removed in 50 g of purified pulverized product (g)/50 $\times$ 1,000,000

[Table 2]

| No. | PC-5 Concentration [ppm] | UV sorting conditions | | | | Results | | | | |
|---|---|---|---|---|---|---|---|---|---|---|
| | | Discharged amount [kg/h] | Sensitivity | Conveyor belt speed [m/min] | Reference color plate (background) | Yield % | Concentration of PC-5 in purified PC-1 [ppm] | | | Removal rate [%] |
| | | | | | | | First time | Second time | Average | |
| Example 1 | 5,000 | 261.6 | 70 | 90 | White paper that develops color by UV light | 99 | 740 | 708 | 724 | 86 |
| Example 2 | 10,000 | | | | | 91 | 1,736 | 1,342 | 1,539 | 85 |
| Example 3 | 50,000 | | | | | 77 | 8,730 | 5,707 | 7,219 | 86 |
| Example 4 | 5,000 | 111.6 | 70 | 90 | | 98 | 0 | 675 | 338 | 93 |
| Example 5 | 10,000 | | | | | 96 | 1,074 | 1,089 | 1,082 | 89 |
| Example 6 | 50,000 | | | | | 85 | 4,712 | 7,228 | 5,970 | 88 |
| Example 7 | 5,000 | 111.6 | 80 | 90 | | 98 | 192 | 0 | 96 | 98 |
| Example 8 | 10,000 | | | | | 95 | 736 | 298 | 517 | 95 |
| Example 9 | 50,000 | | | | | 77 | 3,216 | 2,958 | 3,087 | 94 |
| Example 1-1 | 5,000 | 261.6 | 70 | 90 | None | 98 | 280 | 300 | 290 | 94 |
| Example 2-1 | 10,000 | | | | | 97 | 820 | 796 | 806 | 92 |
| Example 3-1 | 50,000 | | | | | 86 | 501 | 649 | 575 | 99 |

[Table 3-1]

| No. | Resin | | Number of times (Number of passes) | UV sorting conditions | | | | Results | | |
|---|---|---|---|---|---|---|---|---|---|---|
| | Resin | Resin identified and set as defective product (Concentration) | | Discharged amount [kg/h] | Sensitivity | Conveyor belt speed [m/min] | Reference color plate (background) | Yield % | Concentration of PC-1 in purified PC-3 [ppm] | Removal rate [%] |
| Example A | PC-3 | PC-1 (50,000ppm) | 1 | 250 | 70 | 90 | None | 66.0 | 539 | 99.6 |
| | | PC-1 (211 ppm) | 2 | | | | | 99.0 | 211 | 98.9 |
| | | PC-1 (539 ppm) | 3 | | | | | 96.0 | 0 | 100.0 |

[Table 3-2]

| No. | Resin | Resin identified and set as defective product (Concentration) | Number of times (Number of passes) | UV sorting conditions | | | | Results | | | | | |
|---|---|---|---|---|---|---|---|---|---|---|---|---|---|
| | | | | Discharged amount [kg/h] | Sensitivity | Conveyor belt speed [m/min] | Reference color plate (background) | Yield % | Concentration of PC-3 in purified PC-1 [ppm] | Removal rate [%] | Concentration of COC in purified PC-1 [ppm] | Removal rate [%] |
| Example B | PC-1 | PC-3 (50,000 ppm) + COC (1,240 ppm) | 1 | 250 | 70 | 90 | None | 78.0 | 12,732 | 74.5 | 100 | 91.9 |
| | | PC-3 (12,732 ppm) + COC (100 ppm) | 2 | | | | | 99.0 | 539 | 98.9 | 56 | 95.5 |
| | | PC-3 (539 ppm) + COC (56 ppm) | 3 | | | | | 96.0 | 0 | 100.0 | 58 | 95.3 |

[Table 3-3]

| No. | Resin | Resin identified and set as defective product (Concentration) | Number of times (Number of passes) | UV sorting conditions | | | | Results | | |
|---|---|---|---|---|---|---|---|---|---|---|
| | | | | Discharged amount [kg/h] | Sensitivity | Conveyor belt speed [m/min] | Reference color plate (background) | Yield % | Concentration of PC-3 in purified PC-1 [ppm] | Removal rate [%] |
| Example C | PC-1 | PC-3 (50,000 ppm) | 1 | 250 | 70 | 90 | None | 78.0 | 12,732 | 75 |
| | | PC-3 (12,732 ppm) | 2 | | | | | 94.5 | 4,630 | 91 |
| | | PC-3 (4,630 ppm) | 3 | | | | | 97.3 | 502 | 99 |

[Table 3-4]

| No. | Resin | Resin identified and set as defective product (Concentration) | Number of times (Number of passes) | UV sorting conditions | | | | Results | | | | |
|---|---|---|---|---|---|---|---|---|---|---|---|---|
| | | | | Discharged amount [kg/h] | Sensitivity | Conveyor belt speed [m/min] | Reference color plate (background) | Yield % | Concentration of PC-3 in purified PC-1 [ppm] | Removal rate [%] | Concentration of COC in purified PC-1 [ppm] | Removal rate [%] |
| Example D | PC-1 | PC-3 (824 ppm) + COC (2,038 ppm) | 1 | 250 | 70 | 90 | None | 78.0 | 456 | 74.5 | - | - |
| | | PC-3 (456 ppm) + COC | 2 | | 75 | | | 94.5 | 68 | 90.7 | - | - |
| | | PC-3 (68 ppm) + COC | 3 | | 80 | | | 97.3 | 0 | 99.0 | 254 | 87.5 |

[Table 4-1]

| No. | Resin | Resin (concentration) Resin identified and set as defective product | Number of times | UV sorting conditions | | | | |
|---|---|---|---|---|---|---|---|---|
| | | | | Discharged amount [kg/h] | Sensitivity | Conveyor belt speed [m/min] | Reference color plate (background) | Concentration of PC-1 in purified PC-6 [ppm] |
| Example E | PC-6 | PC-1 (10% by mass) | 2 | 250 | 70 | 90 | None | 3.6 |
| Example F | PC-6 | PC-1 (50% by mass) | 2 | 250 | 70 | 90 | None | 166 |

[Table 4-2]

| No. | Resin | Resin (concentration) Resin identified and set as defective product | Number of times | UV sorting conditions | | | | |
|---|---|---|---|---|---|---|---|---|
| | | | | Discharged amount [kg/h] | Sensitivity | Conveyor belt speed [m/min] | Reference color plate (background) | Concentration of PC-6 in purified PC-1 [ppm] |
| Example G | PC-1 | PC-6 (10% by mass) | 2 | 250 | 70 | 90 | None | 3,239 |

[Table 4-3]

| No. | Resin | Resin (concentration) Resin identified and set as defective product | Number of times | UV sorting conditions | | | | |
|---|---|---|---|---|---|---|---|---|
| | | | | Discharged amount [kg/h] | Sensitivity | Conveyor belt speed [m/min] | Reference color plate (background) | Concentration of PC-3 in purified PC-1 [ppm] |
| Example H | PC-1 | PC-3 (10% by mass) | 4 | 250 | 70 | 90 | None | 314 |

[Table 4-4]

| No. | Resin | Resin (concentration) Resin identified and set as defective product | Number of times | UV sorting conditions | | | | |
|---|---|---|---|---|---|---|---|---|
| | | | | Discharged amount [kg/h] | Sensitivity | Conveyor belt speed [m/min] | Reference color plate (background) | Concentration of PC-1 in purified PC-3 [ppm] |
| Example 1 | PC-3 | PC-1 (10% by mass) | 3 | 250 | 70 | 90 | None | 177 |

As illustrated above, the present invention provides a method for obtaining a high-purity recycled resin from a waste resin composition by removing debris containing impurities, etc. therefrom.

## Claims

**1.** A method for producing a recycled resin from a waste resin composition, wherein the waste resin composition comprises:

a thermoplastic resin B which comprises one or more selected from the group consisting of a thermoplastic resin B1 containing a structural unit (b-1) derived from a monomer represented by general formula (1-1) below, a thermoplastic resin B2 containing a structural unit (b-2) derived from a monomer represented by general formula (1-2) below, and a thermoplastic resin B3 containing a structural unit (b-3) derived from a monomer represented by general formula (1-3) below; and
at least one of a thermoplastic resin C containing only a structural unit (c) derived from a monomer represented by general formula (2) below, and a thermoplastic resin D containing at least one structural unit selected from the group consisting of general formulae (7)-(10) below, and
the method comprises:

pulverizing the waste resin composition to obtain a pulverized material; and
sorting the thermoplastic resin B, and the thermoplastic resin C and the thermoplastic resin D by means of UV:

[Chem 1]

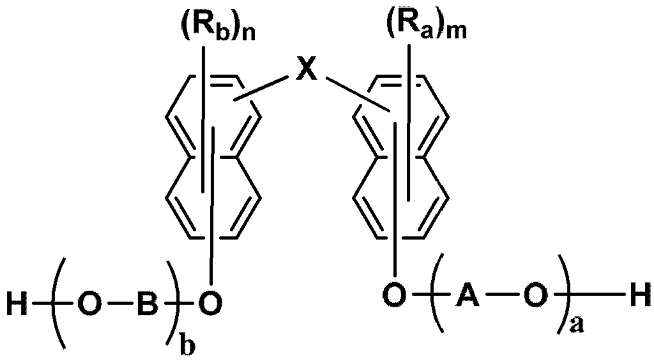

(1 − 1)

in general formula (1-1),

$R_a$ and $R_b$ are each independently selected from a halogen atom, an optionally substituted alkyl group with 1-20 carbon atoms, an optionally substituted alkoxy group with 1-20 carbon atoms, an optionally substituted cycloalkyl group with 5-20 carbon atoms, an optionally substituted cycloalkoxy group with 5-20 carbon atoms, an optionally substituted aryl group with 6-20 carbon atoms, an optionally substituted heteroaryl group with 3-20 carbon atoms containing one or more heteroatoms selected from O, N, and S, an optionally substituted aryloxy group with 6-20 carbon atoms, and -C≡C-$R_h$,
$R_h$ represents an optionally substituted aryl group with 6-20 carbon atoms or an optionally substituted heteroaryl group with 3-20 carbon atoms containing one or more heteroatoms selected from O, N, and S,
m and n each independently represent an integer from 0 to 5, and
X represents a single bond, -O-, -S-, -SO-, -$SO_2$-, -CO-, or a divalent group represented by any of general formulae (3)-(6) below;

[Chem 2]

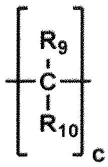
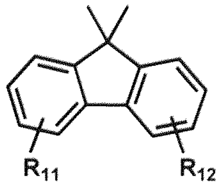
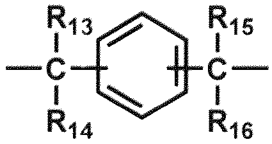
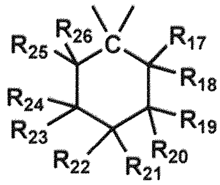

(3) (4) (5) (6)

in general formulae (3)-(6),

$R_9$ and $R_{10}$ each independently represent hydrogen, a halogen, an optionally substituted alkyl group with 1-20 carbon atoms, an optionally substituted alkoxy group with 1-5 carbon atoms, an optionally substituted aryl group with 6-12 carbon atoms, an optionally substituted aralkyl group with 7-17 carbon atoms, or an optionally substituted alkenyl group with 2-15 carbon atoms, or
$R_9$ and $R_{10}$ bind with each other to form a carbon ring having 3-20 carbon atoms or a heterocyclic ring having 1-20 carbon atoms,
c represents an integer from 0 to 20,
$R_{11}$ and $R_{12}$ each independently represent hydrogen, a halogen, an optionally substituted alkyl group with 1-20 carbon atoms, an optionally substituted alkoxy group with 1-5 carbon atoms, an optionally substituted aryl group with 6-12 carbon atoms, an optionally substituted aralkyl group with 7-17 carbon atoms, or an optionally substituted alkenyl group with 2-15 carbon atoms, or
$R_{11}$ and $R_{12}$ bind with each other to form a carbon ring having 3-20 carbon atoms or a heterocyclic ring having 1-20 carbon atoms,
$R_{13}$-$R_{16}$ each independently represent hydrogen, a halogen, an optionally substituted alkyl group with 1-20 carbon atoms, an optionally substituted alkoxy group with 1-5 carbon atoms, an optionally substituted aryl group with 6-12 carbon atoms, an optionally substituted aralkyl group with 7-17 carbon atoms, or an optionally substituted alkenyl group with 2-15 carbon atoms, or
$R_{13}$ and $R_{14}$ or $R_{15}$ and $R_{16}$ bind with each other to form a carbon ring having 3-20 carbon atoms or a heterocyclic ring having 1-20 carbon atoms,
$R_{17}$-$R_{26}$ each independently represent hydrogen or an alkyl group with 1-3 carbon atoms, where at least one of $R_{17}$-$R_{26}$ is an alkyl group with 1-3 carbon atoms,
A and B each independently represent a saturated hydrocarbon group with 1-5 carbon atoms, and
a and b each independently represent an integer from 0 to 10;

[Chem 3-1]

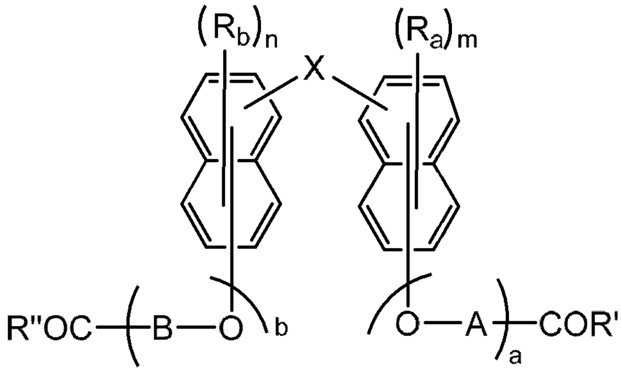

(1−2)

in general formula (1-2),

$R_a$ and $R_b$ are each independently selected from the group consisting of a hydrogen atom, a halogen atom, an optionally substituted alkyl group with 1-20 carbon atoms, an optionally substituted alkoxy group with 1-20 carbon atoms, an optionally substituted cycloalkyl group with 5-20 carbon atoms, an optionally substituted cycloalkoxy group with 5-20 carbon atoms, an

optionally substituted aryl group with 6-20 carbon atoms, an optionally substituted heteroaryl group with 3-20 carbon atoms containing one or more heteroatoms selected from O, N, and S, an optionally substituted aryloxy group with 6-20 carbon atoms, and -C≡C-$R_h$,

$R_h$ represents an optionally substituted aryl group with 6-20 carbon atoms or an optionally substituted heteroaryl group with 3-20 carbon atoms containing one or more heteroatoms selected from O, N, and S,

X represents a single bond or an optionally substituted fluorene group,

A and B are each independently an optionally substituted alkylene group with 1-5 carbon atoms,

m and n are each independently an integer from 0 to 6, and preferably an integer from 0 to 3,

a and b are each independently an integer from 0 to 10, and preferably an integer from 1 to 3, and

R' and R" are each independently selected from the group consisting of a hydroxy group, a halogen atom, an optionally substituted alkoxy group with 1-20 carbon atoms, and an optionally substituted aryloxy group with 6-20 carbon atoms;

[Chem 3-2]

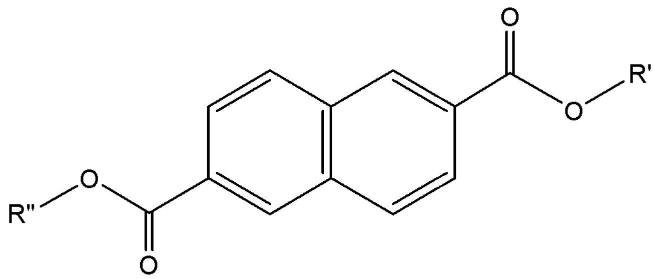

(1-3)

in general formula (1-3),

R' and R" are each independently selected from the group consisting of a hydrogen atom, a halogen atom, an optionally substituted alkyl group with 1-20 carbon atoms, and an optionally substituted aryl group with 6-20 carbon atoms;

[Chem 4]

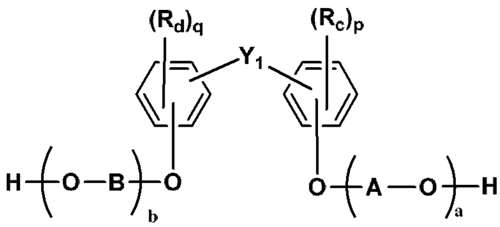

(2)

in general formula (2),

$R_c$ and $R_d$ are each independently selected from a halogen atom, an optionally substituted alkyl group with 1-20 carbon atoms, an optionally substituted alkoxy group with 1-20 carbon atoms, an optionally substituted cycloalkyl group with 5-20 carbon atoms, an optionally substituted cycloalkoxy group with 5-20 carbon atoms, an optionally substituted aryl group with 6-20 carbon atoms, an optionally substituted heteroaryl group with 3-20 carbon atoms containing one or more heteroatoms selected from O, N, and S, an optionally substituted aryloxy group with 6-20 carbon atoms, and -C≡C-$R_h$,

$R_h$ represents an optionally substituted aryl group with 6-20 carbon atoms or an optionally substituted heteroaryl group with 3-20 carbon atoms containing one or more heteroatoms selected from O, N, and S,

p and q each independently represent an integer from 0 to 5, and

$Y_1$ is a single bond, -O-, -S-, -SO-, -$SO_2$-, -CO-, or a divalent group represented by any of general formulae (3)-(6) below;

[Chem 5]

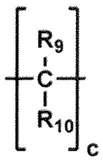
(3)

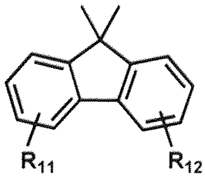
(4)

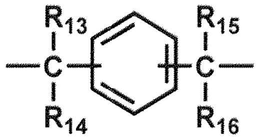
(5)

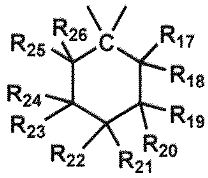
(6)

in general formulae (3)-(6),

$R_9$ and $R_{10}$ each independently represent hydrogen, a halogen, an optionally substituted alkyl group with 1-20 carbon atoms, an optionally substituted alkoxy group with 1-5 carbon atoms, an optionally substituted aryl group with 6-12 carbon atoms, an optionally substituted aralkyl group with 7-17 carbon atoms, or an optionally substituted alkenyl group with 2-15 carbon atoms, or
$R_9$ and $R_{10}$ bind with each other to form a carbon ring having 3-20 carbon atoms or a heterocyclic ring having 1-20 carbon atoms,
c represents an integer from 0 to 20,
$R_{11}$ and $R_{12}$ each independently represent hydrogen, a halogen, an optionally substituted alkyl group with 1-20 carbon atoms, an optionally substituted alkoxy group with 1-5 carbon atoms, an optionally substituted aryl group with 6-12 carbon atoms, an optionally substituted aralkyl group with 7-17 carbon atoms, or an optionally substituted alkenyl group with 2-15 carbon atoms, or
$R_{11}$ and $R_{12}$ bind with each other to form a carbon ring having 3-20 carbon atoms or a heterocyclic ring having 1-20 carbon atoms,
$R_{13}$-$R_{16}$ each independently represent hydrogen, a halogen, an optionally substituted alkyl group with 1-20 carbon atoms, an optionally substituted alkoxy group with 1-5 carbon atoms, an optionally substituted aryl group with 6-12 carbon atoms, an optionally substituted aralkyl group with 7-17 carbon atoms, or an optionally substituted alkenyl group with 2-15 carbon atoms, or
$R_{13}$ and $R_{14}$ or $R_{15}$ and $R_{16}$ bind with each other to form a carbon ring having 3-20 carbon atoms or a heterocyclic ring having 1-20 carbon atoms,
$R_{17}$-$R_{26}$ is each independently hydrogen or an alkyl group with 1-3 carbon atoms, where at least one of $R_{17}$-$R_{26}$ is an alkyl group with 1-3 carbon atoms,
A and B each independently represent a saturated hydrocarbon group with 1-5 carbon atoms, and
a and b each independently represent an integer from 0 to 10;

[Chem 6]

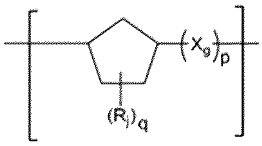

(7)

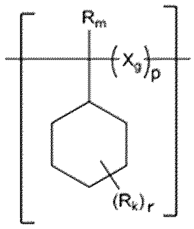

(8)

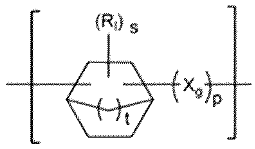

(9)

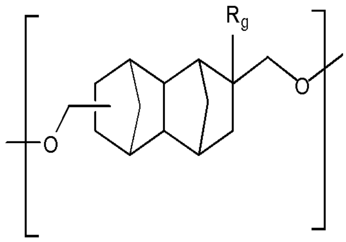

(10)

in general formulae (7)-(10),

$X_g$ each independently represent an alkylene group with 1-10 carbon atoms,
$R_j$, $R_k$, and $R_l$ are each independently selected from a halogen atom, an optionally substituted alkyl group with 1-20 carbon atoms, an optionally substituted alkoxy group with 1-20 carbon atoms, an optionally substituted cycloalkyl group with 5-20 carbon atoms, an optionally substituted cycloalkoxy group with 5-20 carbon atoms, an optionally substituted aryl group with 6-20 carbon atoms, an optionally substituted heteroaryl group with 3-20 carbon atoms containing one or more heteroatoms selected from O, N, and S, an optionally substituted aryloxy group with 6-20 carbon atoms, and $-C \equiv C-R_i$,
$R_i$ represents an aryl group with 6-20 carbon atoms or a heteroaryl group with 3-20 carbon atoms containing one or more heteroatoms selected from O, N, and S,
p each independently represent an integer of 0 or 1,
q, r, and s each independently represent an integer from 0 to 10,
t represents an integer from 1 to 3,
when q is 2 or higher and two $R_j$ exist on adjacent carbon atoms, the two $R_j$ may form a ring structure together,
when r is 2 or higher and two $R_k$ exist on adjacent carbon atoms, the two $R_k$ may form a ring structure together,
when s is 2 or higher and two $R_l$ exist on adjacent carbon atoms, the two $R_l$ may form a ring structure together,
$R_m$ represents a hydrogen atom or an alkyl group with 1-3 carbon atoms, and
$R_g$ represents a hydrogen atom or an alkyl group with 1-3 carbon atoms.

**2.** The method according to claim 1, wherein the pulverized material is subjected to winnowing separation prior to the sorting.

**3.** The method according to claim 1, wherein

the waste resin composition comprises: a thermoplastic resin B which comprises one or more selected from the group consisting of a thermoplastic resin B1 containing a structural unit (b-1) derived from a monomer represented by general formula (1-1) above, a thermoplastic resin B2 containing a structural unit (b-2) derived from a monomer represented by general formula (1-2) above, and a thermoplastic resin B3 containing a structural unit (b-3) derived from a monomer represented by general formula (1-3) above; and a thermoplastic resin C containing only a structural unit (c) derived from a monomer represented by general formula (2) above, and
the method comprises:

pulverizing the waste resin composition to obtain a pulverized material; and
sorting the thermoplastic resin B, and the thermoplastic resin C by means of UV.

**4.** The method according to claim 3, wherein the pulverized material is subjected to winnowing separation prior to the sorting.

**5.** The method according to claim 1, wherein

the waste resin composition comprises: a thermoplastic resin B which comprises one or more selected from the group consisting of a thermoplastic resin B1 containing a structural unit (b-1) derived from a monomer represented by general formula (1-1) above, a thermoplastic resin B2 containing a structural unit (b-2) derived from a monomer represented by general formula (1-2) above, and a thermoplastic resin B3 containing a structural unit (b-3) derived from a monomer represented by general formula (1-3) above; and a thermoplastic resin D containing at least one structural unit selected from the group consisting of general formulae (7)-(10) above, and
the method comprises:

pulverizing the waste resin composition to obtain a pulverized material; and
sorting the thermoplastic resin B, and the thermoplastic resin D by means of UV.

**6.** The method according to claim 5, wherein the pulverized material is subjected to winnowing separation prior to the sorting.

**7.** The method according to claim 1, wherein

the waste resin composition comprises: a thermoplastic resin B which comprises one or more selected from the group consisting of a thermoplastic resin B1 containing a structural unit (b-1) derived from a monomer represented by general formula (1-1) above, a thermoplastic resin B2 containing a structural unit (b-2) derived from a monomer represented by general formula (1-2) above, and a thermoplastic resin B3 containing a structural unit (b-3) derived from a monomer represented by general formula (1-3) above; and both of a thermoplastic resin C containing only a structural unit (c) derived from a monomer represented by general formula (2) above and a thermoplastic resin D containing at least one structural unit selected from the group consisting of general formulae (7)-(10) above, and
the method comprises:

pulverizing the waste resin composition to obtain a pulverized material; and
sorting the thermoplastic resin B, and the thermoplastic resin C and the thermoplastic resin D by means of UV.

**8.** The method according to claim 7, wherein the pulverized material is subjected to winnowing separation prior to the sorting.

**9.** The method according to claim 1, wherein the thermoplastic resin B is a polycarbonate resin, a polyester carbonate resin, or a polyester resin.

**10.** The method according to claim 1, wherein the thermoplastic resin C is a polycarbonate resin, a polyester carbonate resin, or a polyester resin.

**11.** The method according to claim 1, wherein the thermoplastic resin B and the thermoplastic resin C are polycarbonate resins.

## INTERNATIONAL SEARCH REPORT

International application No.
**PCT/JP2024/027061**

**A. CLASSIFICATION OF SUBJECT MATTER**

***B29B 17/02***(2006.01)i; ***B02C 19/00***(2006.01)i; ***C08J 11/04***(2006.01)i; ***C08J 11/06***(2006.01)i; ***C08J 11/16***(2006.01)i; ***C08L 45/00***(2006.01)i; ***C08L 65/00***(2006.01)i; ***C08L 67/00***(2006.01)i; ***C08L 69/00***(2006.01)i
FI: B29B17/02; C08L69/00; C08J11/04; B02C19/00 101Z; C08L67/00; C08L65/00; C08L45/00; C08J11/16; C08J11/06 ZAB

According to International Patent Classification (IPC) or to both national classification and IPC

**B. FIELDS SEARCHED**

Minimum documentation searched (classification system followed by classification symbols)

B29B17/02; B02C19/00; C08J11/04; C08J11/06; C08J11/16; C08L45/00; C08L65/00; C08L67/00; C08L69/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2011-110807 A (RICOH COMPANY, LTD.) 09 June 2011 (2011-06-09) entire text, all drawings | 1-11 |
| A | JP 2010-132798 A (MITSUBISHI ELECTRIC CORPORATION) 17 June 2010 (2010-06-17) entire text, all drawings | 1-11 |
| A | JP 2010-151444 A (MITSUBISHI ELECTRIC CORPORATION) 08 July 2010 (2010-07-08) entire text, all drawings | 1-11 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 August 2024** | **10 September 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/027061**

| Patent document cited in search report | Publication date (day/month/year) | Patent family member(s) | Publication date (day/month/year) |
|---|---|---|---|
| JP 2011-110807 A | 09 June 2011 | (Family: none) | |
| JP 2010-132798 A | 17 June 2010 | (Family: none) | |
| JP 2010-151444 A | 08 July 2010 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010167727 A
- WO 2021200892 A